# EUROPEAN PATENT SPECIFICATION

(11) **EP 3 964 793 B1**
(45) Date of publication and mention of the grant of the patent: **03.12.2025**
(21) Application number: 20798930.2
(22) Date of filing: 29.04.2020
(51) Int. Cl.: G01B 11/28, G01B 11/02, G06T 7/50, G06T 7/11, G06T 7/62, G06T 5/00, G06T 7/00, G06T 7/73, G01B 11/00, G01B 11/24

(54) **FOOD MEASUREMENT METHOD, DEVICE, AND PROGRAM**
VERFAHREN, VORRICHTUNG UND PROGRAMM ZUR MESSUNG VON NAHRUNGSMITTELN
PROCÉDÉ, DISPOSITIF ET PROGRAMME DE MESURE D'ALIMENTS

(30) Priority: 29.04.2019 KR 20190050086; 30.04.2019 KR 20190050377; 30.04.2019 KR 20190050378; 25.10.2019 KR 20190133499
(43) Date of publication of application: 09.03.2022
(73) Proprietor: Nuvi Labs Co., Ltd., Suwon-si, Gyeonggi-do 16419 (KR)
(72) Inventor: KIM, Dae Hoon, Gunpo-si Gyeonggi-do 15851 (KR)
(74) Representative: Kurig, Thomas
(86) International application number: PCT/KR2020/005762
(87) International publication number: WO 2020/222561

(56) References cited:
- WO-A1-2012/115297
- JP-A- 2018 528 545
- JP-B2- 5 790 080
- KR-B1- 101 375 018
- KR-B1- 101 876 147
- US-A1- 2011 182 477
- US-A1- 2013 203 024
- US-A1- 2017 069 225
- HSIN-CHEN CHEN ET AL: "Model-based measurement of food portion size for image-based dietary assessment using 3D/2D registration", MEASUREMENT SCIENCE AND TECHNOLOGY, IOP, BRISTOL, GB, vol. 24, no. 10, 30 August 2013 (2013-08-30), pages 105701, XP020251371, ISSN: 0957-0233, [retrieved on 20130830], DOI: 10.1088/0957-0233/24/10/105701

## Description

### [TECHNICAL FIELD]

The present invention relates to a method for measuring food, and in particular, to a method of measuring the amount of food using volume.

### [BACKGROUND ART]

In recent years, as more people want to maintain a healthy diet such as well-being and diet, the demand for food measuring technology is increasing.

Even in places where food is served to multiple people, such as schools, companies, the military, government offices, hospitals, by measuring the amount of food served and the amount of leftover through measurement of the amount of food served and distributed to people, there are many advantages such as being able to conduct efficient food distribution in anticipation of the amount of demand and supply and to manage the calories of those who are served of the food.

US 2011/182477 A1 relates to a system and method for automatically identifying items of food on a plate and computing the volume of each food item with or without the use of a 3D marker for determining camera focal length and to aid in making a determination of the caloric content of the food on the plate.

US 2017/069225 A1 relates to computer vision techniques of food recognition based on an image of the food and the food container.

US 2013/203024 A1 relates to a method and apparatus for monitoring food consumption by an individual from a food compartment.

HSIN-CHEN CHEN ET AL: "Model-based measurement of food portion size for image-based dietary assessment using 3D/2D registration", MEASUREMENT SCIENCE AND TECHNOLOGY, IOP, BRISTOL, GB, vol. 24, no. 10, 30 August 2013, page 105701, relates to a computational method to estimate food volume from a single photographical image of food contained in a typical dining plate.

However, since most of the currently known technologies are merely searching for images taken through a camera, the accuracy is remarkably degraded, and there is a problem that a larger error occurs in subsequent steps such as calorie calculation since the accuracy in image search is poor.

Accordingly, the inventor has come up with an invention that can accurately analyze and calculate food, not just searching for food by image.

The above information disclosed in this Background section is only for enhancement of understanding of the background of the invention and it may therefore contain information that does not form the prior art that is already known to a person of ordinary skill in the art.

### [DETAILED DESCRIPTION OF THE INVENTION]

### [TECHINICAL PROBLEM]

The present invention for solving the above-described problem is directed to providing a method for measuring food for calculating volume of food by using height information on each pixel of an image photographed through a stereo camera or a depth measuring device.

In addition, the present invention provides a method for measuring food for correcting the calculated volume of food by using information of a serving tableware.

The technical problems to be solved in the present invention are not limited to the technical problems mentioned above, and other technical problems not mentioned will be clearly understood by those of ordinary skill in the art from the following description.

### [TECHNICAL SOLUTION]

The invention is set out in the appended set of claims. The following disclosure serves a better understanding of the present invention. The method for measuring food performed by a computer according to claim 1 of the present invention for solving the above-described problem includes steps of: receiving image data of tableware containing food and depth data of the tableware containing the food, when the tableware containing food is photographed by a photographing unit; calculating a tilt of the tableware image from the tableware image data, and correcting the image data of the tableware containing food and the depth data of the tableware containing food according to the calculated tilt; extracting a shape of the tableware using the corrected depth data of the tableware containing food, and based on this, extracting food image data accommodated in the tableware from the corrected tableware image data; determining a type of the food based on the extracted food image data; and calculating volume of the food based on the corrected depth data of the tableware containing food.

In addition, a server for measuring food according to an example of the present invention for solving the above-described problem includes a receiving unit to receive image data of tableware containing food and depth data of the tableware containing the food, when the tableware containing food is photographed by a photographing unit; a correction unit to calculate a tilt of the tableware image from the tableware image data, and correcting the image data of the tableware containing food and the depth data of the tableware containing food according to the calculated tilt; an extraction unit to extract a shape of the tableware using the corrected depth data of the tableware containing food, and based on this, to extract food image data accommodated in the tableware from the corrected tableware image data; a determination unit to determine a type of the food based on the extracted food image data; and a calculation unit to calculate volume of the food based on the corrected depth data of the tableware containing food.

In addition, a device for measuring food according to claim 7 of the present invention for solving the above-described problem includes a receiving unit to receive image data of tableware containing food and depth data of the tableware containing the food, when the tableware containing food is photographed by a photographing unit; a correction unit to calculate a tilt of the tableware image from the tableware image data, and correcting the image data of the tableware containing food and the depth data of the tableware containing food according to the calculated tilt; an extraction unit to extract a shape of the tableware using the corrected depth data of the tableware containing food, and based on this, to extract food image data accommodated in the tableware from the corrected tableware image data; a determination unit to determine a type of the food based on the extracted food image data; and a calculation unit to calculate volume of the food based on the corrected depth data of the tableware containing food.

In addition to this, another method for implementing the present invention, another system, and a computer-readable recording medium for recording a computer program for executing the method may be further provided.

### [ADVANTAGEOUS EFFECTS OF THE INVENTION]

According to the present invention as described above, there is an effect of calculating accurate volume of food by calculating the volume of food by using height information on each pixel of an image photographed through a stereo camera or a depth measuring device.

In addition, the present invention has an effect of more accurately calculating volume of food by correcting the calculated volume of food by using information on size, depth, and capacity of spaces formed in the serving tableware.

The effects of the present invention are not limited to those mentioned above, and other effects not mentioned will be clearly understood by those of ordinary skill in the art from the following description.

### [DESCRIPTION OF THE DRAWINGS]

The above and other aspects, features, and advantages of the present invention will become more apparent to those of ordinary skill in the art by describing embodiments thereof in detail with reference to the accompanying drawings, in which:
FIG. 1 is a flowchart of a method for measuring food according to an exemplary embodiment of the present invention;
FIG. 2A is a perspective view of a tableware according to an exemplary embodiment of the present invention;
FIG. 2B is a perspective view of a tableware with an identification code attached to the back or side;
FIG. 3 is a perspective view of a tableware containing food according to an exemplary embodiment of the present invention;
FIG. 4 is a perspective view of a tableware in which two foods are stacked in one space in FIG. 3;
FIG. 5 is a perspective view of a tableware with no space division;
FIG. 6 is a flowchart of a method of providing an advanced local model in order to increase the accuracy of determining the type of food;
FIG. 7 is a flowchart of a method for measuring food according to another exemplary embodiment of the present invention;
FIG. 8 is a perspective view of a tablefor describing a background targets.
FIG. 9 is a flowchart of a method of providing restaurant operation information and management information of a meal subject according to an exemplary embodiment of the present invention;
FIG. 10 is a block diagram of a server for measuring food according to an exemplary embodiment of the present invention;
FIG. 11 is a detailed block diagram of the management unit of FIG. 10;
FIG. 12 is a block diagram of a device for measuring food according to an exemplary embodiment of the present invention;
FIGS. 13 to 16 are perspective views of devices for measuring food according to an exemplary embodiment of the present invention;
FIG. 17 is a screen of a device for measuring food according to an exemplary embodiment of the present invention;
FIG. 18 is a block diagram of a server for measuring food according to an exemplary embodiment of the present invention;

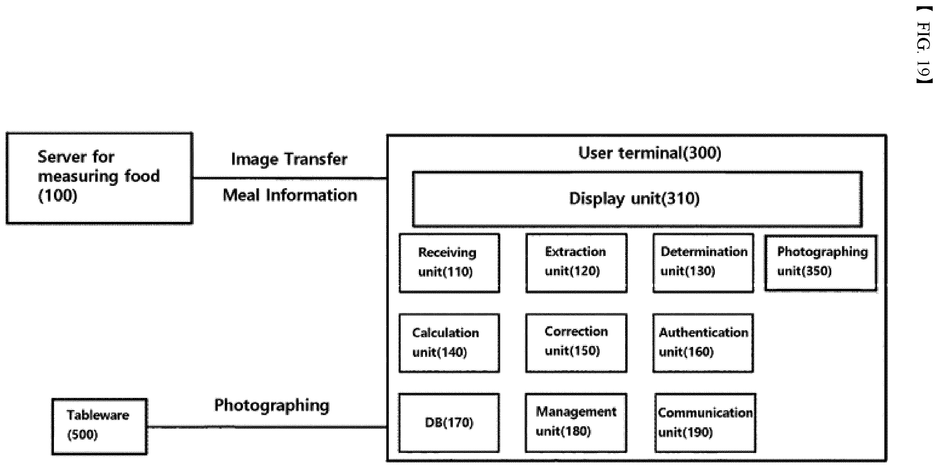

FIG. 19 is a block diagram of a user terminal according to an exemplary embodiment of the present invention.

### [BEST MODE]

Advantages and features of the present invention, and a method of achieving them will be apparent with reference to the embodiments described below in detail together with the accompanying drawings. However, the present invention is not limited to the embodiments disclosed below, and may be embodied in various forms. Rather, the description of the embodiments of the present invention is provided so that this disclosure will be thorough and complete and will fully convey the concept of the invention to those of ordinary skill in the art. Accordingly, the present invention is only defined by the scope of the appended claims.

The terminologies used in this specification are for the purpose of describing embodiments only and are not intended to be limiting to the present invention. In this specification, the singular form also includes the plural form unless specifically specified in the phrase. The terms "comprise" and/or "comprising," when used in this specification, do not preclude the presence or addition of one or more other elements other than elements mentioned. Like reference numerals designate like elements throughout the specification, and the term "and/or" includes each and all combinations of one or more of the mentioned elements. Although "first", "second", and the like are used to describe various elements, it goes without saying that these elements are not limited by these terms. These terms are only used to distinguish one element from another element. Therefore, it goes without saying that the first element mentioned hereinafter may be the second element within the technical idea of the present invention.

Unless otherwise defined, all terms (including technical and scientific terms) used in this specification will be used as meanings that can be commonly understood by those of ordinary skill in the art. In addition, terms defined in a commonly used dictionary are not interpreted ideally or excessively unless explicitly and specifically defined.

Hereinafter, embodiments of the present invention are described in detail with reference to the accompanying drawings.

Prior to the description, the meaning of terms used in this specification is briefly described. However, it should be noted that the description of terms is not intended to limit the technical idea of the present invention unless explicitly described as limiting the present invention, since it is intended to aid understanding of the present specification.

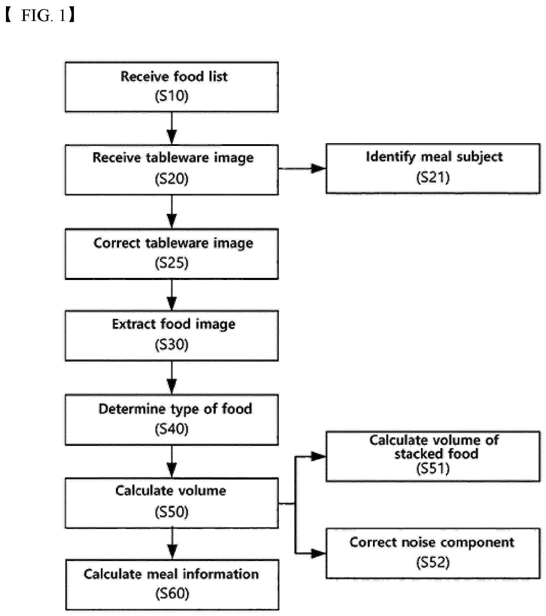

A method for measuring food according to an aspect of the present invention will be described with reference to FIGS. 1 to 5. The method for measuring food according to an embodiment of the present invention is performed by a computer, wherein the computer refers to a server for measuring food 100 or a device for measuring food 200. That is, the photographing may be performed by the device for measuring food 200, but other steps may be performed by the server for measuring food 100 or the device for measuring food 200.

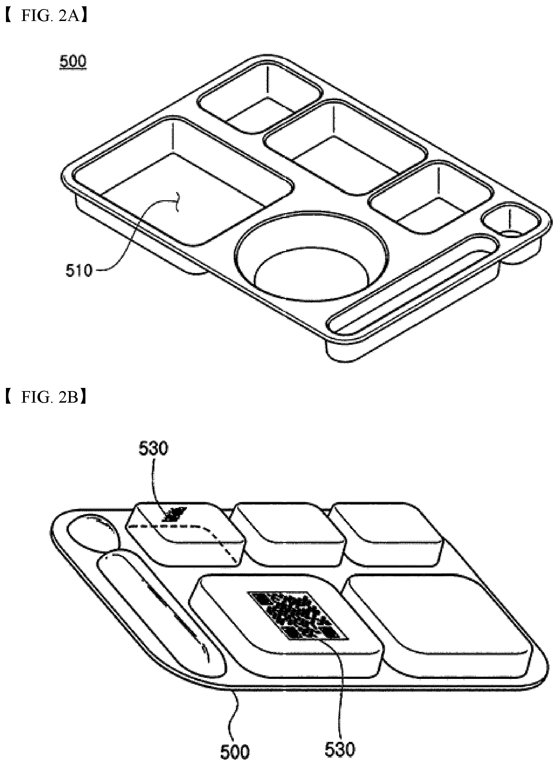

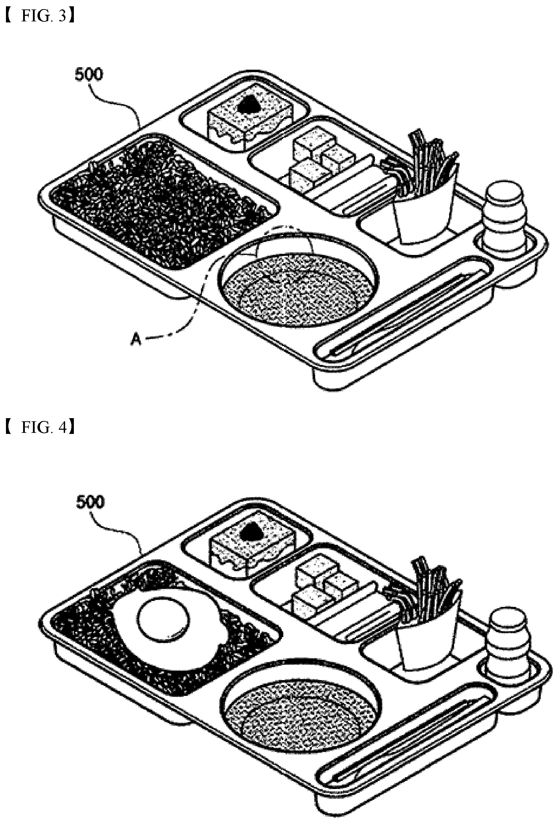

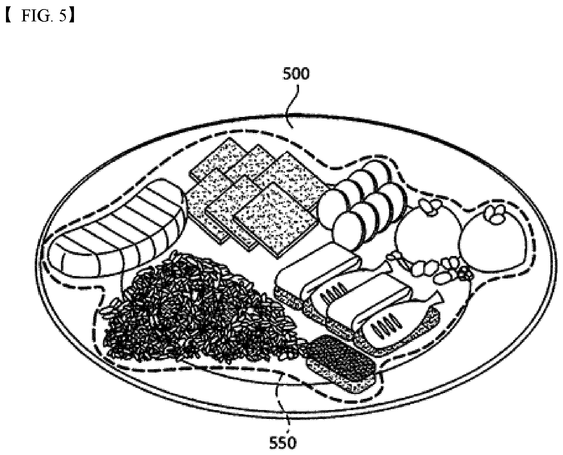

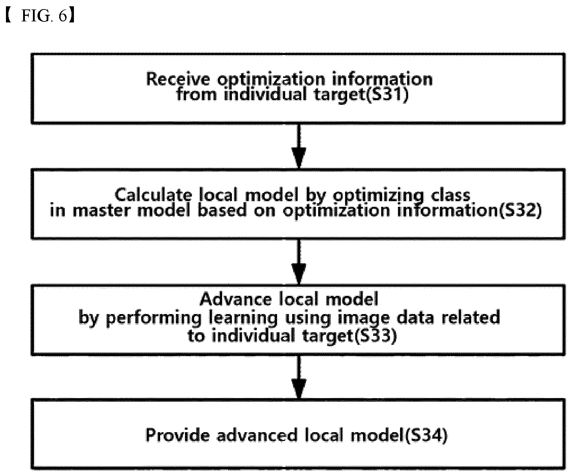

FIG. 1 is a flowchart of a method for measuring food according to an exemplary embodiment of the present invention; FIG. 2A is a perspective view of a tableware according to an exemplary embodiment of the present invention; FIG. 2B is a perspective view of a tableware with an identification code attached to the back or side; FIG. 3 is a perspective view of a tableware containing food according to an exemplary embodiment of the present invention; FIG. 4 is a perspective view of a tableware in which two foods are stacked in one space in FIG. 3; FIG. 5 is a perspective view of a tableware with no space division; and FIG. 6 is a flowchart of a method of providing an advanced local model in order to increase the accuracy of determining the type of food.

The method for measuring food according to an example of the present invention may be performed at a food serving section or a tableware return section of a restaurant, and the restaurant may be a self-service restaurant such as a cafeteria or a buffet, a place where a user moves a tableware 500 to receive food, and may be a place where meals are provided to a group such as a school, a company, or the military. Here, the restaurant may include a food serving section for receiving food or a tableware 500 and a tableware return section for throwing away the leftover and returning the tableware 500 after eating, but is not limited thereto.

However, the method for measuring food according to an example of the present invention is not limited to being performed in a restaurant, particularly a self-service restaurant, and may be performed in other types of restaurants or at home, or may be performed at each seat.

In addition, for convenience of description, the description is made using the tableware 500 with a shape of a food tray divided into spaces 510, but the shape of the tableware 500 is not limited thereto.

Referring to FIG. 1, a receiving unit 110 receives an image of tableware containing food taken through a photographing unit 250 of the device for measuring food 200 at step S20.

The receiving unit 110 normalizes the received image of tableware containing food, and the normalization refers to adjusting or transforming the received image of tableware containing food according to predetermined criteria (e.g., size, brightness, rotation, tilt, etc.).

If the photographing unit 250 can acquire image data and depth data, there is no limitation on the configuration thereof. For example, the photographing unit 250 may include at least one of an RGB camera, a 2D camera, a 3D camera, a Time of Flight (ToF) camera, a light field camera, a stereo camera, an event camera, and an infrared camera, and if it can measure image data and depth data, there is no limitation on the configuration thereof.

Meanwhile, in addition to photographing food or tableware containing food, the photographing unit 250 may photograph biometric information of a meal subject to identify the meal subject. Here, the biometric information of the meal subject may be the face, iris, or fingerprint of the meal subject, but is not limited thereto. One photographing unit 250 may simultaneously or separately photograph food or tableware containing food and biometric information of the meal subject, but the photographing unit may be divided into a photographing unit 250a for photographing food or tableware containing food and a photographing unit 250b for photographing biometric information of the meal subject.

In an aspect of the invention, when photographing the tableware 500 moving along a conveyor belt 270, the photographing unit 250 of the device for measuring food 200 acquires depth data in addition to image data, even if it includes a single camera. It is because if the single photographing unit 250 respectively photograph the moment when the tableware 500 is located at a first position on the conveyor belt 270 and the moment when the tableware 500 is moved and located at a second position on the conveyor belt 270, this may obtain the same effect as photographing the still tableware 500 using the photographing unit 250 including a plurality of cameras.

Since the camera is a device that recognizes light, it is highly affected by the environment such as light reflection. Therefore, it is necessary to minimize the influence of the environment by taking pictures using the photographing unit 250 including two or more cameras. However, even if photographing is performed using the photographing unit 250 including two or more cameras, since it may be affected by the environment, correction thereof is required.

Therefore, in order to optimize according to the characteristics and environment of the restaurant, the computer may control its learning module to learn the situation of the field through the images taken, and to recognize the environment condition based on filter processing, fixed objects and reference objects (background targets described later).

Meanwhile, when photographing the tableware 500 using the device for measuring food 200 according to an example of the present invention, the device for measuring food 200 may detect identification information 530 on the tableware 500 or identification information on the meal subject as well as photographing the tableware 500 from the upper side using the photographing unit 250. That is, it is possible to identify the meal subject by using the device for measuring food 200 simultaneously or separately from the step of receiving the tableware image (S20) at step S21.

Specifically, referring to FIG. 2B, identification information on the tableware 500 may be included in the tableware 500, for example, may be physically included in the tableware 500 in the form of a QR code (Quick Response Code) 530 or a barcode, and in addition to this, identification information in various code types, such as a combination of numbers or letters, and a combination of figures and symbols may be included in the tableware 500. Besides, the identification information on the tableware 500 may be included in the tableware 500 by recorded in various semiconductor devices such as an RFID chip. To this end, the device for measuring food 200 may include an identification information sensing unit 251, and the identification information sensing unit 251 may be placed in the device for measuring food 200 to detect the identification information on the tableware 500 at the same time when the photographing unit 250 photographs the dishes 500 from the upper side.

For example, as shown in FIG. 2B, when the QR code 530 is located on the back or side of the tableware 500, the identification information sensing unit 251 may be located at the lower side to face the photographing unit 250 or be located to recognize the QR code 530 in a horizontal direction, but the location of the identification information sensing unit 251 is not limited thereto, and the identification information sensing unit may be placed in various locations if it can detect the identification information of the tableware 500 at the same time when the photographing unit 250 photographs the top surface of the tableware 500.

In some examples, when the identification information of the dish 500 is located on the upper side of the tableware 500, the device for measuring food 200 may not include a separate identification information sensing unit 251, and may identify the identification information of the tableware 500 by analyzing a tableware image measured using the photographing unit 250.

Besides, identification information on the meal subject may be detected by an authentication unit 160, for example, by applying some methods such as facial recognition which identifies biometric information using image capture of the meal subject, iris recognition, or fingerprint recognition.

In addition, the authentication unit 160 may detect identification information on the meal subject by recognizing a tag including an RFID chip held by the meal subject or a tag including identification information in various code types such as a QR code, a barcode, a combination of numbers or letters, and a combination of figures and symbols.

In the case of using the method for measuring food according to an example of the present invention, various information may be calculated using the measured result, and there may be a difference in information calculated depending on what information the device for measuring food 200 can recognize among information on the tableware 500 and information on the meal subject 530.

First, if both the device for measuring food 200 installed in the food serving section and the device for measuring food 200 installed in the tableware return section may recognize identification information 530 on the tableware 500, and may recognize only identification information on the meal subject, information on each meal subject and information on a group including the corresponding meal subject may be calculated using the method for measuring food according to the present embodiment.

In contrast, if both the device for measuring food 200 installed in the food serving section and the device for measuring food 200 installed in the tableware return section may not recognize the identification information on the meal subject, and may recognize only the identification information 530 on the tableware 500, the information on each meal subject may not be calculated, and only the information on a group including the corresponding meal subject may be calculated using the method for measuring food according to the present example.

Besides, if the device for measuring food 200 installed in the food serving section may recognize both the identification information 530 on the tableware 500 and the identification information on the meal subject, and the device for measuring food 200 installed in the tableware return section may not recognize the identification information 530 on the tableware 500 but may recognize the information on the meal subject, both the information on each meal subject and the information on a group including the corresponding meal subject may be calculated using the method for measuring food according to the present embodiment; since even if the device for measuring food 200 installed in the tableware return section may not recognize the identification information 530 on the tableware 500, the identification information 530 on the tableware 500 held by a specific meal subject may be specified by using the information from the food serving section.

Meanwhile, a food identification device 30 may not include a separate authentication unit 160 and may receive input of identification information from the meal subject through an input unit (not shown) of the device for measuring food 200.

Therefore, in some embodiments, in the step of receiving, by the receiving unit 110, the tableware image taken through the photographing unit 250 (step S20), the receiving unit 110 may also receive at least one of identification information on the tableware 500 and identification information on the meal subject in addition to the tableware image.

Subsequently, referring to FIG. 1, a correction unit 150 performs image correction of the image of tableware containing food at step S25.

More particularly, the correction unit 150 removes a noise component using the image data of tableware containing food, recognize a tilt of the tableware image, and correct the image into a horizontal state image. The corrected image is used in a step of calculating volume (S50) described later.

When photographing the tableware in a restaurant, the photograph may be taken without shaking while the tableware are placed in a specific position. But in some cases, the photographing unit 250 photographs the tableware 500 moving on the conveyor belt 270, the tableware 500 is photographed through the device for measuring food 200 while the meal subject holding the tableware 500, or the photographing unit 250 photographs the user walks while holding the tableware 500.

Since the tableware image may be photographed unclear or the tableware image may be photographed while the angle of the tableware is inclined, the correction unit 150 recognizes the shaking or tilt of the tableware image, select the tableware image with the least shaking or tilt, and correct the tableware image into a horizontal state image, which allows to accurately calculate the volume of the food.

First, the correction unit 150 may analyze a plurality of normalized tableware images in order to select a tableware image with the least shaking among the normalized tableware images. For example, the correction unit 150 may check the degree of blurring of the image in units of each pixel, and through this, select a tableware image that has the least shaking and is clear.

Next, the correction unit 150 may calculate a distance from the photographing unit 250 to a plurality of exposed areas for an area in which the tableware 500 is not covered by food and exposed in the tableware image, and may calculate a tilt of the tableware 50 from the tableware image using the calculated distances to the plurality of exposed areas. Next, the correction unit 150 may correct the photographed tableware image to be a horizontal state using the calculated tilt.

Specifically, the correction unit 150 extract a shape of the tableware 500 using depth information from the depth of tableware image. Since the tableware 500 and the background other than the tableware 500 differ in depth information in the tableware image, using this, the correction unit 150 extracts the tableware 500 from the tableware image.

The correction unit 150 identifies flat areas among areas exposed without being covered by food in the tableware 500, select at least 3 or more points among the flat areas, and identifies depth information of the selected 3 or more points.

Using the 3 or more points, it may be possible to create a virtual plane and check a slope of the plane. That is, the correction unit 150 may calculate a tilt of the tableware 500 using depth information of the 3 or more selected points, and correct the photographed tableware image using the calculated tilt.

**In** some embodiments, after selecting at least 3 or more points in the flat areas, with respect to the 3 or more selected points the accuracy of the calculated tilt may be improved by using an average depth information of the surrounding points of each point as a depth information of each point and by using a relatively large amount of information to calculate the tilt.

In some embodiments, in the process of calculating the tilt of the tableware 500 using depth information of the selected 3 or more points, a gradient value according to a line connecting each point may be derived, through which the tilt of the tableware 500 may be calculated and the photographed tableware image may be corrected using the calculated tilt.

In some embodiments, the correction unit 150 may calculate the tilt of the tableware 50 from the photographed tableware image by identifying an outline of the tableware 50 from the tableware image and by comparing the outline of the tableware 50 from the photographed tableware image and the outline of the tableware 50 from the non-tilted tableware image that is for use as a reference. Next, the correction unit 150 may correct the photographed tableware image using the calculated tilt.

In addition, since noise may occur according to the situation of the field (shake, light reflection, etc.) in two image data of tableware containing food received through the receiving unit 110, the noise may be removed by comparing the two tableware images.

Next, referring to FIG. 1, an extraction unit 120 extracts food image data accommodated in each space 510 of the tableware 500 from the image data of tableware containing food at step S30.

Since the tableware image includes both the tableware 500 and the food image, the food image data may be extracted from the tableware image. For example, the extraction unit 120 may extract food image data using an artificial intelligence model learned to distinguish food and non-food items. Here, when the tableware 500 includes a plurality of spaces 510, the extraction unit 120 may extract food image data for each space 510.

Meanwhile, referring to FIG. 5, it is shown that a plurality of foods are accommodated in a single tableware 500 with no space division, and since the space is not divided within the tableware 500, the extraction unit 120 may recognize as one whole food image 550 including the plurality of foods. In this case, the extraction unit 120 shall additionally perform a process of dividing and extracting one whole food image data into each food image data.

Next, referring to FIG. 1, a determination unit 130 determines a type of each food based on the extracted food image data at step S40.

The determination unit 130 may determine the food type using the extracted food image data. For example, the determination unit 130 may include an artificial intelligence model learned based on image in order to recognize the type of food, but the method of determining the type of food is not limited thereto.

In the method for measuring food according to the present embodiment, in order to increase the recognition rate of food types, the learned artificial intelligence model may be optimized for an individual target (e.g., an individual restaurant or an individual meal subject) for which the method for measuring food is used, in the following manner.

First, referring to FIG. 6, the receiving unit 110 receives optimization information for optimizing a learned model from an individual target such as a restaurant or a meal subject at step S31.

The learned model to be optimized is a master model, and the master model is a model that has been trained to classify types of food by using image data photographed from the device for measuring food 200 or the user terminal 300 or processed results as a data set.

Since the master model is constructed from all the captured image data or processed results used in the method for measuring food as a data set, in order to determine the type of specific food image data, the master model determines what kind of food the specific food image data is from dozens, hundreds, or thousands of food type classes.

Optimizing the master model is to reduce the number of cases for food type classes that need to be considered in order to determine the food type of specific food image data. To this end, it may be possible to obtain optimization information for individual target such as a restaurant or a meal subject.

That is, the receiving unit 110 may receive optimization information for an individual target. The optimization information may be, for example, information on something consumed by each individual target or something having a high probability of being consumed by a meal subject that uses an individual target such as menu information sold or provided by an individual restaurant or types of food frequently consumed by the individual meal subject.

Next, referring to FIG. 6, the determination unit 130 calculates a local model by optimizing a class in the master model based on the optimization information at step S32.

The determination unit 130 calculates the local model for an individual target by selecting a food type class that is highly related to the individual target based on the optimization information and optimizing the class of the master model in a manner of reducing a considered food type class from the master model to a food type class that is highly related to the individual target.

Next, referring to FIG. 6, the determination unit 130 advances the local model by performing learning using image data related to the individual target at step S33.

The determination unit 130 may advance the local model by performing learning of the calculated local model using image data related to the individual target or a result processed in relation to the individual target.

Here, the image data related to the individual target may be image data photographed within an individual restaurant as an individual target or a result of processing image data photographed within the individual restaurant, or image data photographed by an individual meal subject as an individual target or a result of processing image data photographed by the individual meal subject.

Meanwhile, in the process of advancing the local model by learning the calculated local model by using image data related to an individual target or a result processed in relation to the individual target, the determination unit 130 may perform learning while changing various variables such as learning parameters and learning cycles in the process of performing learning using the artificial intelligence algorithm, and perform an advancement process using a learning model with the highest accuracy among the performed learning methods.

Next, referring to FIG. 6, the determination unit 130 may provide an advanced local model, and by using this, the determination unit 130 may improve accuracy by determining the type of each food through the extracted food image data at step S34.

In some examples, as a preceding step, a step of receiving, by the receiving unit 110, food list information provided by a restaurant (step S10) may be further included.

In this case, in the step of determining the food type (step S40), the determination unit 130 may determine the type of each food by matching the extracted food image data and food list information.

In this way, the determination unit 130 may independently determine the type of food by analyzing food image data, or may determine the type of food by matching with stored food list information, and the method of determining the type of food is not limited thereto.

Next, referring to FIG. 1, a calculation unit 140 calculates a volume of each food by using height information for each pixel (i.e., 3D distance data) of the extracted food image data at step S50.

As mentioned above, since the tableware image was photographed through the photographing unit 250 capable of acquiring depth data, height information (3D distance data) for each pixel is included in the food image data as depth data, and so this may be used to calculate the volume of each food.

Here, the computer includes a database 170 in which tableware images and tableware information including sizes, depths and capacities of the plurality of spaces 510 formed in the tableware 500 are stored.

In addition, the step of calculating volume (step S50) may further include a step of correcting, by the correction unit 150, the calculated volume of each food using the tableware information including the size, depth and capacity of the space 510 in which each food is accommodated.

Since the depth of each space 510 is different according to the type of tableware 500, the correction unit 150 may determine more accurately how much food has been accumulated by using the tableware information. Since the database 170 of the computer according to the present embodiment stores data on the tableware 500 used in a restaurant, the volume of each food extracted using tableware information may be more accurately calculated by using the method for measuring food according to the present embodiment.

For example, when the determination unit 130 determines that the type of food accommodated in a specific space 510 in the tableware 500 is a liquid, the calculation unit 140 may calculate the volume of the liquid by using the tableware information including a location where the liquid and the corresponding space 510 contact each other, and a size, depth, and capacity of the space 510.

When a liquid food such as a 'soup' in a specific space 510 such as 'A' area shown in FIG. 3, there will be inevitably a portion where the 'soup' and the corresponding space 510 contact at a certain height. Using this, the calculation unit 140 calculates the volume of the liquid food by recognizing a position where the liquid food and the corresponding space 510 contact in the tableware image and calculating the volume up to the height of 'A' area using the tableware information (size, depth, and capacity) of the space 510.

For example, the portion where the 'soup' and the space 510 are in contact is marked in the 'A' area shown in FIG. 3, and the calculation unit 140 recognizes a position where the liquid contact the corresponding space 510 containing the liquid using the 'A' area in the food image data. **In** addition, the calculation unit 140 may calculate the volume of 'soup' by calculating the volume up to the height of area 'A' area using the tableware information (eg, capacity).

**In** some embodiments, additional correction may be performed on a single tableware 500 with no space division as shown in FIG. 5. **In** the step of calculating volume, when it is determined that a plurality of foods are accommodated in an undivided space within one tableware 500 from the food image data, the calculation unit 140 requests the extraction unit 120 to transmit image data of each of the plurality of foods and calculates the volume of each food.

And the calculation unit 140 may calculate the volume of the whole food using the extracted whole food image data, and correct the volume of each food by comparing the total volume of each food calculated in the step of calculating volume and the volume calculated through the whole food image data.

In some embodiments, the step of calculating volume (step S50) may further include a step of calculating volume of stacked food (step S51).

More specifically, a plurality of foods may be stacked in a specific space 510 within the tableware 500. Therefore, when it is recognized that different foods are stacked in a specific space 510 within the tableware 500, the calculation unit 140 calculates the volume of the foods located on the lower side by using image data of the foods located on the upper side, the calculated volume information, and the size, depth, and capacity information of the space 510.

Referring to FIG. 4, is a view illustrating that the fried egg is stacked on top of rice in the space 510 in which rice is accommodated in the tableware. The calculation unit 140 calculates the size and volume of the fried egg based on the tableware information and the image data of the fried egg.

Then, the calculation unit 140 can predict the height of the rice accommodated in the corresponding space 510 based on the size and volume information of the fried egg, and along with the tableware information, the volume of the rice accommodated in the corresponding space 510 can be calculated.

Specifically, it may be possible to calculate volume of area where food (e.g., boiled rice) located on the lower side is covered by food (e.g., a fried egg) located on the upper side by calculating the area where the food (e.g., boiled rice) located on the lower side is covered by the food (e.g., a fried egg) located on the upper side and calculating a height of the area covered by the food (e.g., a fried egg) located on the upper side using the height of the area not covered by the food (e.g., a fried egg) located on the upper side among food (e.g., boiled rice) located on the lower side.

To this end, the height of the area where the food (e.g., boiled rice) located on the lower side is covered by the food (e.g., a fried egg) located on the upper side may be set as an average of the height of the area where the food (e.g., boiled rice) located on the lower side is not covered by the food (e.g., a fried egg) located on the upper side, but it is not limited thereto.

In some embodiments, data on foods (e.g., fried eggs, baked fish, seasoned laver, etc.) likely to be stacked on top of other foods may be previously stored in the database 170 of the computer. For example, data on foods mainly staked on the upper side of the food may include volume data or weight data, and through this, the calculation unit 140 may quickly calculate the volume of the food stacked on the upper side.

Meanwhile, the step of calculating volume (step S50) further includes a step of correcting, by the correction unit 150, a noise component photographed together with a tableware in a tableware image (step S52). That is, it further includes a step that the correction unit 150 detects a noise component that is not food and has a volume in the image data of the tableware containing food and performs correction to exclude the volume of the detected noise component from the calculated food volume in the process of calculating volume of each food.

Here, the noise component is not food and has a volume, and the volume of the food may be calculated larger than the actual volume due to the volume of the noise component. Therefore, the correction unit 150 may recognize the noise component in the photographed image in order to accurately calculate the volume of the food and perform correction to exclude the volume of the noise component from the volume of the food calculated by the calculation unit 140.

For example, a hand or cutlery (e.g., a spoon, a fork, a knife, etc.) may be a noise component that is not food and has a volume, and a lid of a dairy product may correspond to this, but it is not limited thereto. For example, noise information on an object corresponding to a noise component may be previously stored in the database 170 of the computer, and the correction unit 150 may recognize a noise component in the photographed image and perform correction to exclude the volume of the noise component from the volume of food calculated by the calculation unit 140.

For example, in the step of correcting the noise component, the correction unit 150 recognizes the user's hand image from the tableware image and performs the calibration by excluding the hand volume value from the food volume value calculated by the calculation unit 140. Specifically, the tableware 500 may be photographed by the device for measuring food 200 while the user is holding the tableware 500, but an error in calculating the volume of food due to image data of a hand holding the tableware 500 may occur. So the correction unit 150 performs a correction that excludes the volume value of the body part such as the hand from the volume value of the food calculated based on the image data of the tableware containing the food, thereby calculating the volume of the food (S50) can increase the accuracy.

In one embodiment, the correction unit 150 may pre-learn the image data for empty tableware 500, hands, or cutleries, and if tableware image includes hands or cutleries, the correction unit may recognize them and perform correction to exclude the volume of the hands or cutleries.

More specifically, the correction unit 150 detects whether the user's hand or cutlery is present in the tableware image data containing the food. In addition, when the user's hand or cutlery is included in the tableware image, the volume value of the user's hand or cutlery is excluded from the food volume value calculated based on the tableware image data containing the food.

Due to the configuration and operations of the correction unit 150 described above, the food measuring method according to an embodiment of the present invention exhibits the effect of increasing the accuracy when subsequent steps are performed.

Next, referring to FIG. 1, the calculation unit 140 calculates meal information including the weight of each food by using the volume information and food information of each food calculated in the step S50 (step S60).

The database 170 of the computer has stored food information including weight per volume for each food, calorie information per weight for each food, and nutrition facts per weight for each food.

Foods have different weight per volume depending on the type, and their calories are different from each other. Accordingly, in an embodiment of the present invention, food information including weight per volume for each food is stored in the database 170, and using this, the calculation unit 140 calculates weight of food from volume information of food.

Using this, after the step of calculating weight (step S60), the calculation unit 140 may calculate calories of food accommodated in a user's serving tableware using the calculated weight information of each food, and in addition, calculate nutritional component information eaten by the user, and calculate additional specific information such as allergy precautions based on food or nutritional components included in the food.

Besides, the calculation unit 140 may calculate price information for corresponding food by using the type of food and the volume or weight of each food.

The calculation unit 140 may provide information included in the above-described meal information to a display unit 210 of the device for measuring food 200 or a display unit 310 of the user terminal 300. The UI of the screen provided on the display units 210 and 310 will be described later.

For example, the calculation unit 140 may provide different information to be displayed on the display unit 210/310 of the food serving section and the display unit 210/310 of the tableware return section. For example, the display unit 210/310 of the food serving section may display information on the type of food, information on calories, nutritional component information, allergy information and price information, and the display unit 210/310 of the tableware return section may additionally display information on an amount actually eaten in addition to the above information. However, the meal information calculated by the calculation unit 140 is not limited thereto, and various information may be displayed without limitation by using photographed information or information stored in the database 170.

Accordingly, the meal subject may make payment through a payment unit 240 of the device for measuring food 200 or the user terminal 300 by cash, card, account transfer, QR code tagging, RFID tagging, or facial recognition, etc. according to the price information provided.

In an embodiment, a restaurant may have a weighing device (not shown) capable of measuring the weight of the tableware 500, but it is not limited thereto, and it may further include a step that the receiving unit 110 receives the weight information of the tableware 500 measured from the weighing device (not shown) provided in the restaurant, and a step that the correction unit 150 corrects the weight of each food by matching the total weight of each food and the weight of the empty tableware calculated with the received weight information.

The above-described correction step can be selectively adopted and used, and since the weight may be measured differently from the actual weight due to the user's hand or various factors in the process of measuring the weight, if the weight information is measured differently to the extent that it exceeds threshold value, the correction step may not be performed.

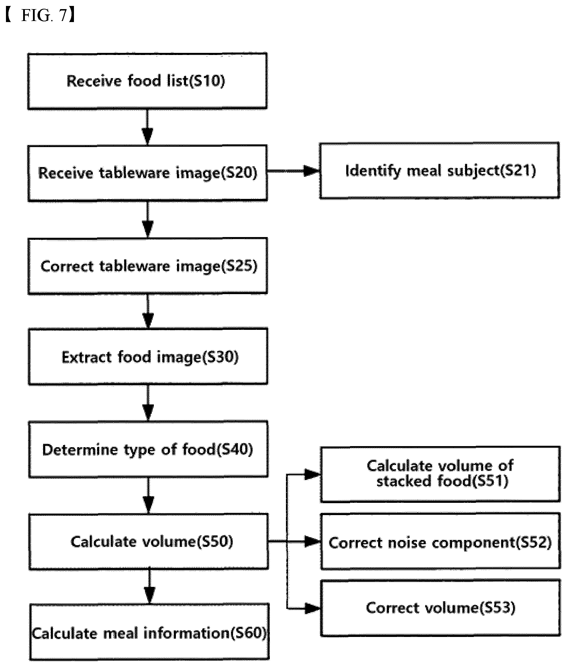

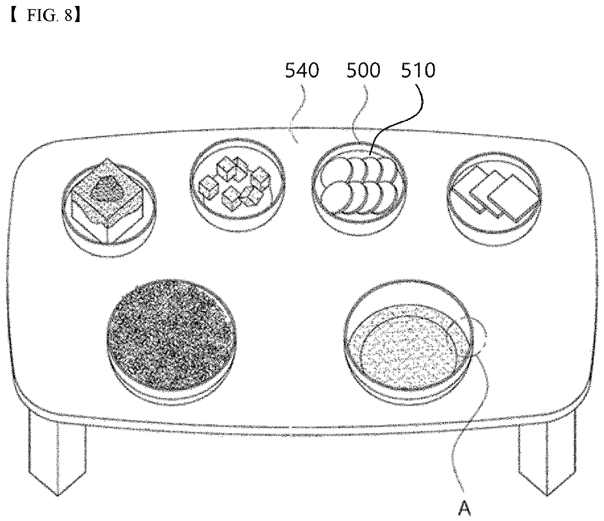

Hereinafter, a method for measuring food according to another embodiment of the present invention that uses the user terminal 300 as the device for measuring food 200 will be described with reference to FIG. 7. However, the difference from the method for measuring food according to an embodiment of the present invention will be mainly described, and description of the same content will be omitted. FIG. 7 is a flowchart of a method for measuring food according to another exemplary embodiment of the present invention. FIG. 8 is a perspective view of a tablefor describing a background targets.

The method for measuring food according to another embodiment of the present invention is performed by a computer, wherein the computer refers to a server for measuring food 100 or a user terminal 300. That is, the photographing may be performed by the user terminal 300, but other steps may be performed by the server for measuring food 100 or the user terminal 300.

Here, the user terminal 300 is a portable mobile terminal, in which a service application related to a method for measuring food is installed. The user terminal 300 may acquire image data and depth data. To this end, the user terminal 300 may include at least one of an RGB camera, a 2D camera, a 3D camera, a Time of Flight (ToF) camera, a light field camera, a stereo camera, an event camera, and an infrared camera. For example, the user terminal 300 may be one of electronic devices such as a digital camera, a computer, an Ultra Mobile PC (UMPC), a workstation, a net-book, a Personal Digital Assistants (PDA), a portable computer, a web tablet, or a wireless phone, a mobile phone, a smart phone, an e-book, a PMP (portable multimedia player), a portable game console, a navigation device, a black box or a digital camera, and include all user devices capable of installing and executing a food measurement application related to the server for measuring food 100 or the device for measuring food 200.

First, referring to FIG. 7, a receiving unit 110 receives an image of tableware taken through a photographing unit 350 of the user terminal 300 at step S20.

Here, food may be photographed according to a request to shoot a photograph of a service application installed in the user terminal 300, and a guide for a method of photographing food, an angle, etc. may be provided to the service application user as by video or sound.

In an example, the service application may request to shoot food two times or more from different angles when not using the 3D camera or ToF camera. In the case of not using a 3D camera or a ToF camera, if the food is photographed more than once from different angles, the depth data may be obtained by comparing two or more image data of tableware containing food. In addition, even if the purpose is not to acquire depth data, if the image is photographed twice or more, the accuracy thereof increases in the subsequent calculation and correction steps.

Subsequently, referring to FIG. 7, a correction unit 150 performs image correction of the tableware image at step S25.

In an embodiment, in the step of receiving the tableware image (step S10), tilt information of the user terminal 300 measured through a gyro sensor (not shown) of the user terminal 300 may be received when food is photographed through the photographing unit 350 of the user terminal 300. The correction unit 150 may correct the tilt of the photographed image data of tableware containing food by using the tilt information of the user terminal 300.

According to an embodiment of the present invention, since a certain angle of tilt may occur in the process of photographing food through the photographing unit 350 by the user holding the user terminal 300, the above-described steps may be performed to correct the image data of tableware containing food into a horizontal state.

Next, referring to FIG. 7, an extraction unit 120 extracts food image data accommodated in space 510 of the tableware 500 from the image data of tableware containing food at step S30.

Since the tableware image photographed by the user terminal 300 may not contain only food, only food image data is extracted from the image at this step for accurate volume calculation.

The extraction unit 120 accurately extracts food from the background using a function of recognizing and extracting food from the background, and separates and extracts each image data of two or more foods when two or more foods are included, and in this process, a model learned using an artificial intelligence algorithm may be used.

Next, referring to FIG. 7, a determination unit 130 determines a type of each food based on the extracted food image data at step S40.

The determination unit 130 determines the food type of each food image data extracted by the extraction unit 120 using a model learned using an artificial intelligence algorithm. In some embodiments, if a plurality of determination results with similar accuracy are obtained, the determination unit 130 may output the plurality of determination results to the user terminal 300 and request the user to input or select a suitable result through the service application of the user terminal 300.

Next, referring to FIG. 7, a calculation unit 140 calculates a volume of each food by using height information for each pixel (i.e., 3D distance data) of the extracted food image data at step S50.

The step of calculating volume (step S50) includes a step of correcting volume (step S53). In an embodiment, a background target may be used for volume correction in the step of correcting volume (step S53).

In the step of correcting volume (step S53), the determination unit 130 may recognize the background target included in the received tableware image, and the correction unit 150 may correct the volume of each food calculated in the step S50 based on size information and location information of the recognized background target.

Referring to FIG. 8, the correction unit 150 may perform volume correction of each food by comparing the background target and height information of each food, or may perform volume correction of each food by comparing the background target and size information of each food.

Here, the background target is photographed with food or separately photographed through the photographing unit 350, and a tableware 500 containing food; a table; a cutlery; and a user's fingers, etc. may be used as the background target. However, it is not limited thereto, and the background target may be applied to any target having a usual size. For example, the background target may be applied to any target whose size is determined, such as coins, bills, and smartphones (by product type). **In** some embodiments, information on the size of a background target photographed through the photographing unit 350 may be previously stored in a database 170.

**In** some embodiments, the background target may be separately photographed through the photographing unit 350 of the user terminal 300 and size information may be previously stored in the database 170 . Accordingly, the correction unit 150 may predict the volume of food from the extracted food image data based on the size or height of the background target with high accuracy.

As a first example, the service application may request the user to photograph the user's hand at a certain distance through the photographing unit 350. Alternatively, the service application may request to measure and input the actual size of the user's hand/finger.

**In** addition, the receiving unit 110 analyzes the user's hand image photographed and stores information on the actual size of the user's hand in the database 170.

Thereafter, when it is recognized that the user's hand is included in the received tableware image, the determination unit 130 may set the user's hand as a background target, and the correction unit 150 may correct the volume of each food calculated by the calculation unit 140 based on the location information and size information of the background target.

As a second example, the service application may request the user to photograph tableware 500, tables, cutleries, etc. used at home through the photographing unit 350 at a predetermined distance. **In** this case, the table may refer to a table or a rice table where the user places the tableware 500 and has a meal.

Specifically, the computer may analyze the image of the tableware 500 used by the user at home, photographed through the photographing unit 350 of the user terminal 300, and store information on the tableware 500 including size, depth, and capacity information of the corresponding tableware 500 in the database 170.

More specifically, since height information for each pixel is stored in the image photographed through the photographing unit 350 of the user terminal 300 according to an embodiment of the present invention, when the image data for the empty tableware 500 is received, the calculation unit 140 may calculate size, depth, and capacity information for the tableware using height information for each pixel of the image data of the tableware, which means to store them as the tableware information in the database 170.

**In** addition, as a result of analyzing food image, if food contained in the tableware 500 exists among the food image, the calculation unit 140 performs correction of the calculated volume of each food by using information on the size, depth, and capacity of the tableware 500 in which the corresponding food is accommodated.

As described above, if the size, depth, and capacity information of the corresponding tableware 500 is known, a more accurate result may be obtained by performing a correction step.

**In** some embodiments, the service application may request the user to measure the actual size of the tableware 500, the table, and the cutlery, etc. (e.g., information on the width, height, or perimeter of the table) and input them into the user terminal 300.

As a third example, a case of using a background target that is not related to food will be described. For example, the user may photograph a 500 won coin along with food, and input through the service application that a 500 won coin has been photographed as a background target.

Accordingly, the determination unit 130 recognizes the 500 won coin (background target) included in the tableware image including the received food, and the correction unit 150 corrects calculated volume of each food based on size information of the 500 won coin (background target).

**In** this way, since objects whose sizes are generally used by most people can be applied as background targets, the user can easily photograph surrounding objects with food so that the correction unit corrects the volume of each food.

**In** addition, the accuracy may be increased by correcting the volume by variously utilizing location information (restaurant, food service, etc.), weather information (ultraviolet rays, reduction of food type), user's status information (during diet, exercise, fighting disease, medication, etc.), personal preference information, and peripheral device information.

As a fourth example, the computer may build up big data by storing image data photographed through the user terminals 300 of a plurality of users, information calculated through the image data, and information on restaurants that match the places where the images were photographed.

For example, when user A orders menu C from restaurant B and photographs menu C through the user terminal 300, the type of food included in menu C is determined, the volume of each food is calculated, and the computer is stored in the database 170 by storing such information is utilized as big data.

Then, the food image data is received through the user terminal 300 of a specific user, and the location information at which the food image was taken and the type of food determined are matched with the data of the database 170 in the computer to match the previous calculation result of the details can be detected, and the calculated volume information of each food can be corrected using this.

For example, if user D photographed food at a location matching restaurant B and transferred the food image data, the location information is matched with big data to determine that user D was located at restaurant B, and correction for the calculated volume information may be performed by inquiring the previous result data matching the ordered menu.

In this regard, the opposite is also possible. More specifically, if data about food is stored first and it is known what kind of food a user ordered and ate when the user is paying, inversely, the stored data may be retrieved so as to record volume and nutrition information.

In summary, when it is photographed by the user terminal 300, the service application may request the user to photograph the background target with an image or sound before photographing food, or may request to photograph the background target with food. Then, the determination unit 130 recognizes the received background target, and the correction unit 150 corrects the volume of each food calculated by the calculation unit 140 based on the location information and size information of the background target.

Next, referring to FIG. 7, the calculation unit 140 calculates meal information including the weight of each food by using the volume information and food information of each food calculated in the step S50 (step S60).

Using the method for measuring food according to according to an embodiment of the present invention, the computer may measure the amount of food served (meaning the amount of food before meals) and the amount of leftover for each meal subject at a restaurant or at home, and using this, may calculate the amount of food eaten.

In addition, the computer may generate operating information for restaurants and management information for meal subjects by using the amount of food served, the amount of leftover, and the amount of food eaten for meal subjects eating at restaurants or at home, and the management information for meal subjects may include, for example, user's nutritional status, eating habits, and whether the user eats only what one wants, etc.

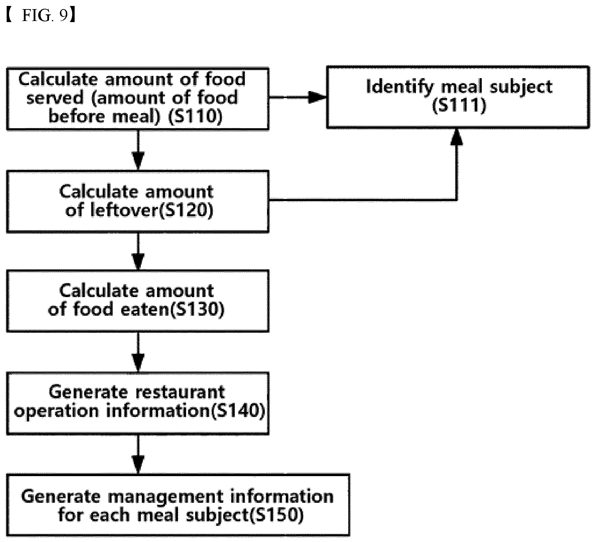

Hereinafter, a method of providing restaurant operation information and management information of a meal subject according to an embodiment of the present invention will be described with reference to FIG. 9. FIG. 9 is a flowchart of a method of providing restaurant operation information and management information of a meal subject according to an exemplary embodiment of the present invention.

First, referring to FIG. 9, the receiving unit 110 acquires pre-meal tableware data (pre-meal tableware image data) photographed through the food serving section photographing unit 250 of the food serving section or the photographing unit 350 of the user terminal 300, and using this, the calculation unit 140 calculates the amount of food served for a meal subject at step S110. A detailed description is the same as described with reference to FIGS. 1 to 8, and a step of identifying a meal subject (step S111) may be performed together. Here, the pre-meal tableware refers to the tableware 500 in a state in which food is contained in the tableware 500 of the meal subject before starting meal.

Next, referring to FIG. 9, the receiving unit 110 acquires post-meal tableware data (post-meal tableware image data) photographed through the tableware return section photographing unit 250 of the tableware return section or the photographing unit 350 of the user terminal 300, and using this, the calculation unit 140 calculates the amount of leftover for the meal subject at step S120. A detailed description is the same as described with reference to FIGS. 1 to 8, and a step of identifying a meal subject (step S111) may be performed together. Here, the post-meal tableware refers to the tableware 500 of the meal subject after a meal.

Next, referring to FIG. 9, the calculation unit 140 calculates an amount of food eaten of the meal subject by using the calculated an amount of food served and an amount of leftover at step S130.

Through steps S110 to S120, the computer may obtain information such as how much the meal subject ate meal and how much the meal subject left meal by calculating the amount of food served, the amount of food eaten, and the amount of leftover of the meal subject for each food menu provided by the restaurant.

In addition, the computer according to an embodiment of the present invention may perform the following operations to improve the accuracy of calculating the amount of food.

In an embodiment, the calculation unit 140 verifies whether the sum of the amount of food eaten and the amount of leftover of the meal subject calculated through the above steps matches the amount of food served, and if there is a discrepancy according to the verification result, the calculation unit 140 may correct at least one of the amount of food served, the amount of leftover, and the amount of food eaten calculated through the above steps so that the sum of the amount of food eaten and the amount of leftover matches the amount of food served, and records the result in the database 170.

In an embodiment, the calculation unit 140 verifies whether the sum of the total amount of food eaten and the total amount of leftover of meal subjects at a restaurant calculated through the above steps matches the total amount of food served, and if there is a discrepancy according to the verification result, the calculation unit 140 may correct at least one of the total amount of food served, the total amount of leftovers, and the total amount of food eaten calculated through the above steps so that the sum of the total amount of food eaten and the total amount of leftover matches the total amount of food served, and records the result in the database 170.

In addition, the calculation unit 140 verifies whether the sum of the total amount of food eaten and the total amount of leftovers of meal subjects at the restaurant calculated through the above steps matches the total amount of food served, and records the result in the database 170. More specifically, the calculation unit 140 verifies whether the difference value between the total amount of food served and the total amount of leftovers of the meal subjects eating at the restaurant matches the total amount of food eaten.

In addition, the calculation unit 140 performs verification by comparing the total amount of food prepared at the restaurant with the sum of the total amount of leftovers generated by the meal subjects at the restaurant, the total amount of remaining food not served at the restaurant, and the total amount of food eaten by the meal subjects at the restaurant, and if there is a difference according to the verification result, the calculation unit 140 may correct at least one of the total amount of leftovers, the total amount of remaining food, and the total amount of food eaten so that the total amount of food prepared at the restaurant matches the sum of the total amount of leftovers generated by the meal subjects at the restaurant, the total amount of remaining food not served at the restaurant, and the total amount of food eaten by the meal subjects at the restaurant, and record the result in the database 170.

Here, the amount of leftover may be the amount of food left by the meal subject after being served to the meal subject, and the amount of remaining food may be the amount of food left without being served to the meal subject, and the amount of remaining food may be calculated through the above steps or through a separate method.

In addition, the database 170 may store a result of measuring the total weight of the amount of food prepared for each serving at the restaurant, the total volume (weight) of the remaining food, and the total weight of the leftovers, and the calculation unit 140 performs verification by comparing the total volume (weight) of the prepared food with the sum of the total volume (weight) of the amount of leftovers, the total volume (weight) of the amount of remaining food, and the total amount of food eaten by the meal subjects at the restaurant calculated through the above steps, and if there is a difference according to the verification result, the calculation unit 140 may correct the total amount of food eaten by the meal subjects calculated through the above steps so that the total amount of food prepared at the restaurant matches the sum of the total amount of leftovers generated by the meal subjects at the restaurant, the total amount of remaining food not served at the restaurant, and the total amount of food eaten by the meal subjects at the restaurant, and record the result in the database 170.

**In** this way, the calculation unit 140 may identify and improve problems by performing verification using various types of information and recording the accuracy due to calculation/correction.

For example, the database 170 may store the measurement result of the total volume (weight) of the amount of food prepared for each serving at the restaurant and the total volume (weight) of the leftover amount. The calculation unit 140 calculates the difference between the total volume (weight) of the amount of food prepared and the total volume (weight) of the leftover amount. And the calculation unit 140 compare the total amount of food eaten by the meal subjects the calculated difference and the total sum of meals of the meal subjects in the restaurant calculated through the above steps for verification and record in the database 170 . (For example, if the total volume of menu A prepared in a restaurant is 200 and all of them are served without any leftovers, the sum of the volumes of menu A served to the meal subjects should approximate 200)

Meanwhile, in order to accurately calculate the amount of food eaten, pictures must be taken before and after meal, but there may be a case where the user does not accidentally take a picture after meal.

Therefore, if the calculation unit 140 receives image data of tableware containing food before a meal and then does not receive a photographed post-meal tableware image data until a preset time lapses, the calculation unit determines that the post-meal tableware image data has not been photographed, and calculates the user's expected amount of food eaten.

For example, the calculation unit 140 may calculate the expected amount of food eaten by the user by regarding that the user has not left a leftover, or may calculate the expected amount of food eaten by the user based on information such as an average amount of food eaten by the user, status information (e.g., during diet, increasing weight, exercise), degree of hunger, user preference about menus included in the pre-meal food image, and taste information of menus stored in the database 170, and store the calculated result in the database 170.

Next, referring to FIG. 9, a management unit 180 of the computer generates operation information of the restaurant based on the amount of food served, the amount of leftover, and the amount of food eaten for the meal subjects registered in the restaurant at step S140.

Next, referring to FIG. 9, the management unit 180 of the computer generates management information for each meal subject based on the amount of food served, the amount of leftover, and the amount of food eaten for the meal subjects registered in the restaurant at step S150.

Step S140 means generating operation information that helps the restaurant operation.

More specifically, a serving amount control module 181 of the management unit 180 uses information on the total prepared amount for serving prepared for serving at the restaurant, the total amount of food served for the meal subjects who received serving, and the number of remaining meal subjects who did not receive serving to calculate target serving amount per person for remaining meal subjects and provide it to a restaurant manager device (not shown).

**In** this case, the restaurant manager may refer to a person in charge who designs a menu in the restaurant and serves food directly to the meal subjects, a manager who manages the restaurant, or a dietitian of the restaurant. A restaurant manager device such as a display device 30 may be installed around food prepared to be served in front of the restaurant manager of the restaurant.

Accordingly, when the serving amount control module 181 provides information on the target serving amount per person for remaining meal subjects on the restaurant manager display, the restaurant manager may use this to control the serving amount for the remaining meal subjects. For example, the restaurant manager may raise the target serving amount per person for the remaining meal subjects if the prepared amount for serving is sufficient compared to the number of remaining meal subjects, and reduce the target serving amount per person for the remaining meal subjects if the prepared amount for serving is insufficient compared to the number of remaining meal subjects.

In an embodiment of the present invention, the restaurant manager may mean a person in charge who directly distributes meals to meal subjects in the restaurant as described above, may mean a manager who manages the restaurant, or a nutritionist of the restaurant.

Through such a configuration, if a large amount of food preparation remains compared to the number of remaining meal subjects, it is possible to increase the target serving amount per person for the remaining meal subjects and to reduce food waste.

In addition, if the amount of food preparation is insufficient compared to the number of remaining meal subjects, it is possible to reduce the target distribution amount per person for the remaining meal subjects, thereby preventing the occurrence of people (meal subjects) who cannot eat due to lack of food.

In an example, the operation information generation step (step S140) may include a step that a serving group management module 183 checks the affiliation of each personnel to be served, stores the amount of food served, the amount of leftovers, and the amount of food eaten for each affiliation and using this, generates information for each affiliation including at least one of preferred food, non-preferred food, amount of leftovers, nutritional status for each affiliation; and a step that extracts correlation information by matching the weather, the day of the week, schedule information for each affiliation, and the information for each affiliation.

In this case, the affiliation of the personnel to be served may mean a company, group, team, etc. in the case of a company, a department, a class, etc. in the case of a school, and corps, division, regiment, battalion, company, platoon, squad, etc. in the case of the military.

Further, the schedule information for each affiliation may mean a branch, a project in progress, or a business in the case of a company, a semester or a test period in the case of a school, and various training periods in the case of the military.

Accordingly, according to an embodiment of the present invention, it may be not only possible to identify taste preference for food for each affiliation using information on preferred food and non-preferred food depending on the affiliation of the meal subjects, but also to prepare an accurate guide for the next serving menu by analyzing correlation between the weather, the day of the week, schedule information for each affiliation, and an amount of food eaten.

**In** addition, the manager can check the amount of leftovers and nutritional status for each affiliation.

**In** addition, by extracting related information by matching the weather, day of the week, and schedule information for each affiliation with the affiliation information, the manager can check changes in appetite or food taste of meal subjects according to the weather and day of the week, and it is possible to understand how the food amount of the soldiers changes according to the training schedule in the case of the military.

The manager can use such information to appropriately adjust the distribution menu and amount according to the military affiliation and training schedule, thereby providing suitable food to the soldiers who are digesting the training schedule.

**In** an embodiment, in the operation information generation step (step S140), if the serving amount is similar for each restaurant, but the difference in the amount of leftovers differs by more than a certain amount, the management unit may determine that the restaurant having smaller amount of leftovers has excellent food ingredient grades and cooking methods, and provide information on food ingredient supply and demand and cooking methods of the corresponding restaurant to restaurant manager devices of other restaurants.

For example, if two or more restaurants have similar food menus and servings, but a big difference in the amount of leftovers, a restaurant with a small amount of leftovers has a higher grade of ingredients, a better cooking method, and a restaurant with a large amount of leftovers. may mean that the grade of the ingredients is low and the cooking method is inferior.

Accordingly, the management unit may exert an effect of improving quality of restaurants by providing information on food ingredient supply and demand and cooking methods of the restaurant having smaller amount of leftover.

In an example, the management information generation step (step S150) includes a step that a meal subject management module 185 generates information for each subject including at least one of preferred food, non-preferred food, an average amount of leftover, nutritional status, an average amount of food eaten by using body information, an amount of food served, amount of leftover, and an amount of food eaten for each meal subject.

**In** addition, the management information generation step also includes a step that the meal subject management module 185 calculates physical strength management information and risk of obesity for each meal subject using the information for each subject, and if the amount of food eaten of a meal subject not set as a diet state decreases below a certain amount for a certain period of time or the amount of leftover of the meal subject increases above a certain amount for a certain period of time, the meal subject is set as a subject of attention.

For example, most soldiers have a regular life and schedule, so they need to receive a steady supply of nutrition, and if there are no personal problems, in most cases, they will maintain a certain amount of food. However, if a personal problem occurs and the motivation is low and the physical condition is not good, this can appear in the amount of food eaten, so it is used to detect the individual problem early.

Therefore, if the amount of food eaten of a meal subject not set as a diet state decreases below a certain amount for a certain period of time or the amount of leftover of the meal subject increases above a certain amount for a certain period of time, the meal subject management module 185 determines that the meal subject has a problem causing a decrease in appetite, and set the meal subject as a subject of attention. Through this, there is an effect that it is possible to prepare countermeasures such as consultation by a manager by early detection of danger signs before an accident occurs to personnel such as protective-concerned soldiers in a place such as the military.

**In** addition, when the remaining amount of the meal subject who is not set in the diet state increases to a certain amount or more for a certain period of time, the meal subject management module 185 set the subject of the meal as the subject of attention. As the amount of food distributed by the corresponding meal subject is at a level similar to the previous one, but the appetite is lowered and the amount of food is decreased. It is judged that the amount of leftovers is increasing due to the decrease of amount of food eaten.

**In** this way, the meal subject management module 185 manages each meal subject, and by setting the meal subject suspected of having a problem as a target of attention, risk before an accident occurs to personnel such as interested soldiers in places such as the military. It has the effect of being able to prepare countermeasures such as early detection of symptoms and consultation with the manager.

**In** addition, since the meal subject management module 185 generates target-specific information including information such as the nutritional status and average meal amount of each meal subject, the manager uses such information to provide characteristics and status of each member as well as individual information. Characteristics and status can be checked.

**In** an embodiment, the operation information generation step (S140 step) includes a step that average preferred food, non-preferred food, and an amount of food eaten for meal subjects are calculated and using this, a serving menu recommendation module 187 derives one or more recommended menus and prepared amount for serving of the restaurant and provides them to the restaurant manager device.

**In** a restaurant where meals are served at least once or twice a day, it is a very difficult task for a restaurant manager to set a menu for each meal, taking into account the tastes and nutritional status of the meal subjects.

Even considering the nutritional status, there is a problem that a lot of leftovers (food waste) are generated because it does not match the taste (preferred food) of the meal subjects, and it becomes difficult to match the nutritional status when the nutritional status is taken into account.

Therefore, the serving menu recommendation module 187 calculates the average preferred food, non-preferred food, and meal amount for each food menu of the meal subjects, and uses this to derive and provide the meal preparation amount along with the recommended menu. It has the effect of helping the restaurant manager manage it.

In addition, in order to implement such an algorithm, a degree of relevance for each food is stored in the database 170 of the computer. For example, if foods A, **B,** and C are highly related and the meal subjects of the corresponding restaurant prefer food **B,** it may be determined that foods A and C are likely to be preferred.

At this time, the serving menu recommendation module 187 may derive a recommended menu using preference information and taste evaluation score of food menu to be described below.

In an embodiment, a serving menu evaluation module 189 of the management unit 180 generates operation information and management information based on the amount of food served, the amount of leftover, and the amount of food eaten, and evaluates a preference of each food menu and a taste evaluation score of the food served itself by using an amount of change in the amount of food served and an amount of change in the amount of leftover of each of the foods served. With this information, the restaurant manager can check whether there is a problem with the food preparation process.

The database 170 of the computer stores a reference value for the amount of food served at the restaurant. While receiving a meal, the meal subject increases the amount of food served if it looks tasty through the appearance or smell of the food, or decreases the amount of food in the opposite case. And when it doesn't taste good, the meal subject leaves a lot of food.

The above-described configuration evaluates a score by using these features, and more specifically, it is determined based on the following criteria.

First, when a serving amount of a particular food is greater than a reference value and an amount of leftover is less than a reference value, the serving menu evaluation module 189 increases a preference of the corresponding food menu and increases a taste evaluation score of the corresponding food served itself.

In this case, the eaters (meal subject) saw the food with the naked eye in the process of receiving the food and increased the amount of the food because it was the food they preferred. And when the meal subject in the process of having meal, if food is delicious, the meal subject consumed all of the food or less left the food.

Accordingly, the serving menu evaluation module 189 evaluates the preference score for the corresponding food menu highly, and the taste evaluation score of the served food itself is also highly evaluated to evaluate the selection of ingredients or the cooking of the food properly.

Second, when the serving amount of a particular food is greater than the reference value and the amount of leftover is greater than the reference value, the serving menu evaluation module 189 increases the preference of the corresponding food menu and decreases the taste evaluation score of the corresponding food served itself.

In this case, the meal subject looked at the food with the naked eye during the process of being served and increased the amount of the food because it was the food they preferred, but they decided that the food was different from the taste they thought or did not taste as they were eating. It means that it is judged that the leftover amount is more than the standard.

Therefore, the serving menu evaluation module 189 increases the preference score for the corresponding food menu, but evaluates the taste evaluation score of the served food itself to be low, so that the selection of ingredients or the cooking of the food is not performed properly.

Third, when the serving amount of a particular food is less than the reference value and the amount of leftover is less than the reference value, the serving menu evaluation module 189 decreases the preference of the corresponding food menu and increases the taste evaluation score of the corresponding food served itself.

In this case, the meal subject saw the food with the naked eye in the process of receiving the food and reduced the amount of the food because it was the food that they did not like. It means that it is judged that the food is surprisingly tasty while proceeding with the meal, and that the food is consumed or left behind.

Therefore, the serving menu evaluation module 189 evaluates the preference score for the corresponding food menu low, but the taste evaluation score of the served food itself is evaluated high, so that the food is not preferred by the meal subject, but the selection of ingredients or the cooking of the food is done properly. It will be evaluated that the meal subject are satisfied.

Fourth, when the serving amount of a particular food is less than the reference value and the amount of leftover is greater than the reference value, the serving menu evaluation module 189 decreases the preference of the corresponding food menu and decreases the taste evaluation score of the corresponding food served itself.

In this case, the meal subject saw the food with the naked eye during the process of being served, and because it was a food they did not like, they reduced the amount of the food served. It means that a lot of the food is left behind because it is judged that the food is not tasty while the meal is in progress, and the amount of leftovers is more than the standard.

Therefore, the serving menu evaluation module 189 evaluates the preference score for the corresponding food menu low, and the taste evaluation score of the distributed food itself is also low, so that the food is not the food preferred by the meal subject, and the selection or ingredients of the cooking was not properly prepared.

Due to the configuration of the serving menu evaluation module 189 as described above, the restaurant manager prepares the distribution menu and food materials for the meal subjects through the preference (preference score) of the meal subjects for each food menu and the taste evaluation score of the food. Of course, it is possible to check whether there is a problem in the food preparation process.

In an example, the meal subject management module 185 of the management unit 180 generates nutrition facts eaten by each meal subject based on the amount of food eaten by the meal subjects, and derives and provides nutritional intake status information based on the nutrition facts generated at regular time intervals. In this case, the meal subject management module 185 may provide the derived information to a terminal of the meal subject, that is, the user terminal 300, a terminal of a guardian of the meal subject, a terminal of a manager of the meal subject, and a terminal of the restaurant manager, etc.

In one example, the management unit 180 may perform a program for improving the nutritional status and reducing the amount of leftovers by using the meal amount and eating habits information of the meal subjects.

The management unit 180 grasps nutritional information and eating habits information of each meal subject based on the meal amount and leftover amount of the meal subject. **In** addition, rewards or penalties are provided according to changes in nutritional status and amount of leftover of each meal subject derived using the above information.

**In** more detail, the management unit 180 determines whether each meal subject has an even nutritional intake and correct eating habits based on the amount of leftover food and the amount of each meal of the meal subject, and compares the nutritional status with the previous record for each serving. It means providing rewards such as money and points to the meal subject when it is judged that the food has improved, and providing penalties such as punishment when it is judged that the nutritional status has not improved or deteriorated.

**In** addition, the management unit 180 stores and monitors the amount of leftovers of each meal subject each time a meal is served, and if it is determined that the amount of leftovers of a specific meal subject is decreasing, provides a reward to the corresponding meal subject, and determines that the amount of leftovers is not reduced or is increasing This means that a penalty such as punishment is provided to the subject of the meal.

**In** this way, the nutritional information and dietary information of each meal subject are identified. And rewards or penalties are provided according to the behavioral changes of each meal subject, it naturally induces the meal subject to consume nutrients evenly without being unbalanced, and exhibits the effect of reducing the occurrence of food waste.

**In** addition, when the meal subject is a student or a patient who needs management by a guardian, the meal subject management module 185 of the management unit 180 may provide a pre-meal tableware image and a post-meal tableware image of the meal subject obtained through the photographing unit 250 to the terminal of the guardian of the meal subject.

**In** addition, the guardian of the meal subject can check whether the meal subject is eating properly by checking the photo through the application.

**In** the case of a student or patient, it is necessary to maintain the nutritional status evenly and sufficiently for health, so continuous management is necessary, and it is necessary to provide information about the nutritional status of the student to the guardian.

Therefore, the meal subject management module 185 periodically receives and manages the body information or health information of each student or patient, and derives information on the basic metabolic rate and necessary nutrients for each student in consideration of the body information and the school schedule.

The meal subject management module 185 determines the nutritional status and eating habits of the student or patient based on their serving menu, data of an amount of food eaten, and an amount of basic metabolism.

The meal subject management module 185 may provide the information obtained and determined in this way to the user terminal 300 and the terminal of guardian of the meal subject, and at the same time, based on the nutritional status and eating habits of each meal subject, may derive a recommended menu good for the corresponding meal subject to eat at home and may recommend a nutritional supplement according to the situation.

For example, if it is determined that vitamin A and D may be insufficient as a result of the evaluation of student A's eating habits and nutritional status, a menu with sufficient intake of vitamins A and D is derived as a recommended menu. And if the degree of vitamin A and D deficiency is serious, it recommends nutritional supplements.

Here, even if the subject of the meal is not a student or a patient, based on the analyzed nutritional status of the user, eating habits, unbalanced diet, etc., the computer determines what nutrients the user needs if the user's nutritional status is unbalanced, the computer derives a menu for the user's nutritional status and fitting the user's eating habits, and provides information to the user terminal 300. It is also possible to exert an advertising effect by providing information on various nutritional supplements.

In addition, services that can be provided when the user terminal 300 is used will be described. Since the computer can determine the amount consumed by the user for each type of food, the user's eating habits can be analyzed, and the user's nutritional intake can be identified using information on nutrients contained in each food.

In addition, the user's body information may be input through a service application installed in the user terminal 300, and the user's basic metabolism may be calculated using the body information.

In addition, by using the user's nutritional status and eating habit information derived as above, one or more food menus matching the user may be derived and provided through a service application, or the information may be provided in conjunction with other food ordering applications.

In this case, the service application may directly receive input of information on the user's preferred food and non-preferred food from the user, and may receive input of information on the user's allergy, disease, and the like and exclude foods that the user should not eat from the recommended menu.

In addition, using such information, the determination unit 130 may provide a warning (notification) to the service application when food that the user should not eat is included in the food image photographed through a photographing unit 55 of a portable device 50, thereby preventing users from accidentally eating the food.

In an example, the service application may receive various measurement data in conjunction with wearable devices used and worn by the user. When such a configuration is included, the computer can secure the user's basal metabolic rate, health information, etc. in more detail, and can also be used as various health care information.

The computer may collect data on the amount of food before meal, the amount of food eaten, and the amount of leftover at each meal of the user through the user terminal 300 and store the data in the database 170, thereby constructing information such as the user's nutritional status and eating habits, and may collecting data on the user's body information, and user's activity index, activity information, and exercise information collected through various health and exercise applications to construct the user's health care information.

In addition, by interlocking with other health management applications and medical information applications to collect user's medical information, the user's nutritional status, eating habits, health care information, and medical information may be used to derive and provide customized diet and health supplement information for the user, and products related thereto may be directly sold through a service application.

For example, when subscribing to the service of a service application provided by an external server (not shown), a comprehensive checkup can be provided, a customized health supplement can be provided to the user, and a customized diet can be delivered once a week. Various types of services may be provided, such as giving.

Hereinafter, a device and a server for implementing a method for measuring food according to an embodiment of the present invention will be described.

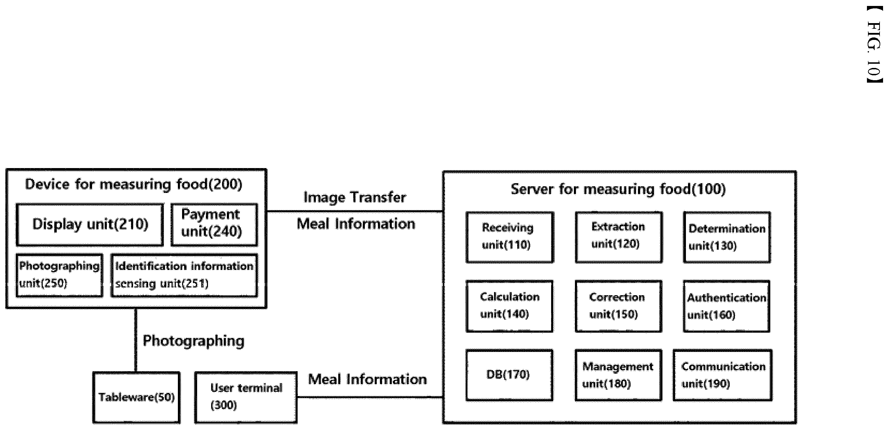

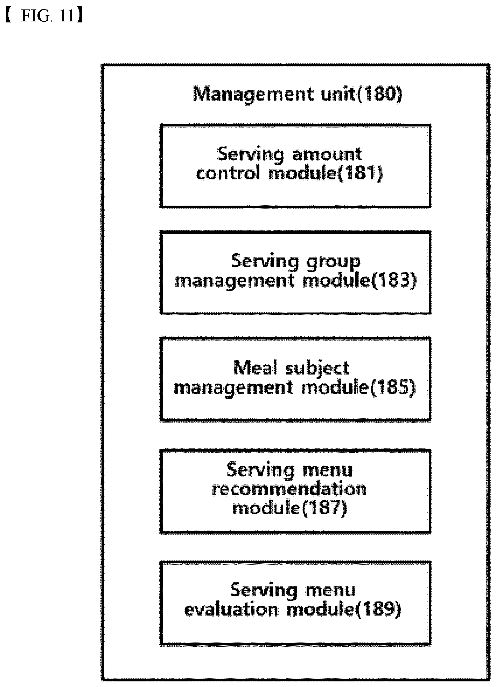

A server for measuring food 100 according to an embodiment of the present invention will be described with reference to FIGS. 9 and 10. FIG. 10 is a block diagram of a server for measuring food according to an exemplary embodiment of the present invention and FIG. 11 is a detailed block diagram of the management unit of FIG. 10.

Referring to FIG. 10, a server for measuring food 100 according to an embodiment of the present invention includes a receiving unit 110, an extraction unit 120, a determination unit 130, a calculation unit 140, a correction unit 150, an authentication unit 160, a database 170, a management unit 180, and a communication unit 190.

However, in some embodiments, the server 100 may include fewer or more components than the components illustrated in FIG. 10.

The receiving unit 110 receives a tableware image photographed through one or more photographing units 250.

The extraction unit 120 extracts food image data accommodated in each space 510 of the tableware 500 from the image data of tableware containing food.

The determination unit 130 determines a type of each food based on the extracted food image data.

The calculation unit 140 calculates a volume of each food by using height information for each pixel of the extracted food image data.

The database 170 stores an empty tableware image, tableware information including size, depth, and capacity of a plurality of spaces 510 formed in the tableware 500, and food information including weight per volume for each food.

Referring to FIG. 11, the management unit 180 includes a serving amount control module 181, a serving group management module 183, a meal subject management module 185, a serving menu recommendation module 187, and a serving menu evaluation module 189, and the functions of each module are as described above.

The communication unit 190 performs communication so as to receive a photographed tableware image from the photographing unit 250 installed in the restaurant, and may play a role to transmit various information calculated and generated by the server 100 to a person in charge or the terminal of the user.

The authentication unit 160 identifies a user by authenticating user information received from devices such as the device for measuring food 200 and a kiosk device 30, and loads various information on the user.

In addition, information on the weight, calories, etc. of foods in the serving tableware calculated through the calculation unit 140 of the server 100 is provided to the terminal of the user authenticated through the authentication unit 160. In this case, the information may be provided through a service application provided by the server 100 itself.

In addition, the computer (server, device) according to the embodiment of the present invention may perform the following operations to improve the accuracy of food calculation.

In one embodiment, the calculation unit 140 verifies whether the sum of the amount of food eaten and the amount of leftover of the meal subject calculated through the above steps matches the amount of food served, and if there is a discrepancy according to the verification result, at least one of the amount of food eaten, the amount of leftover, the amount of food served calculated through the above steps may be corrected so that the sum of the amount of food eaten and the amount of leftover coincides with the amount of food served, and the result thereof is recorded in the database 170 by the calculation unit 140.

In addition, the calculation unit 140 verifies whether the sum of the total amount of food eaten and the total amount of leftovers of the meal subjects calculated through the above steps is the same as the total amount of food served, and if there is a discrepancy according to the verification result, at least one of the total amount of food eaten, the total amount of leftover, the total amount of food served calculated through the above steps may be corrected so that the sum of the total amount of food eaten and the total amount of leftover coincides with the total amount of food served, and the result thereof is recorded in the database 170 by the calculation unit 140.

**In** more detail, the calculation unit 140 verifies whether a difference value between the total amount of food served and the total amount of leftovers of the meal subjects at the restaurant coincides with the total amount of food eaten.

**In** addition, the calculation unit 140 compares the total amount of food prepared in the restaurant with the sum of the total amount of leftovers generated in the restaurant, the total amount of remaining food generated in the restaurant, and the total amount of food eaten of the meal subjects of the corresponding restaurant to verify. If there is a discrepancy according to the verification result, at least one of the the total amount of leftovers generated in the restaurant, the total amount of remaining food generated in the restaurant or the total amount of food eaten of the meal subjects of the corresponding restaurant may be corrected so that the sum of the total amount of leftovers generated in the restaurant, the total amount of remaining food generated in the restaurant and the total amount of food eaten of the meal subjects of the corresponding restaurant coincides with the total amount of food prepared in the restaurant, and the result thereof is recorded in the database 170 by the calculation unit 140.

Here, the amount of leftover food is the amount of food left over from being distributed to the meal subject and eaten by the meal subject, and the amount of remining food may be the amount of food remaining without being distributed to the meal subject, and the amount of remining food is calculated through the above steps or through a separate method. can be calculated.

More specifically, the database 170 may store the measurement results of the total volume (weight) of the food prepared for each serving at the restaurant, the total volume (weight) of the leftovers amount, and the total volume (weight) of the remaining amount, The calculation unit 140 compares the total volume (weight) of the prepared food with the sum of the total volume (weight) of the leftovers amount, the total volume (weight) of the remaining amount, and the total volume (weight) of food eaten of the meal subjects of the restaurant calculated through the above steps to perform the verification.

If there is a discrepancy according to the verification result, the total volume (weight) of food eaten of the meal subjects of the restaurant may be corrected so that the total volume (weight) of the prepared food coincides with the sum of the total volume (weight) of the leftovers amount, the total volume (weight) of the remaining amount, and the total volume (weight) of food eaten of the meal subjects of the restaurant, and the result thereof is recorded in the database 170 by the calculation unit 140. (For example, if the total volume of menu A prepared in a restaurant is 200 and all of them are served without any leftovers, the sum of the volumes of menu A served to the diners should approximate 200)

In this way, the calculation unit 140 performs verification using various pieces of information and records the accuracy due to calculation/correction, so that problems can be identified and improved.

As an embodiment, the artificial intelligence algorithm of the calculation unit 140 according to an embodiment of the present invention may perform volume recognition accuracy comparison and supplementation using an image learning result as a method for verifying volume recognition and increasing reliability. For example, it is possible to increase the accuracy by inputting images of different amounts of bread, making a judgment about whether the volume is too small or too much, and re-learning when an error or noise occurs.

Since the server for measuring food 100 according to an embodiment of the present invention described above differs from the method for measuring food described with reference to FIGS. 1 to 8 only in the category of the invention and the contents are the same, duplicate descriptions and examples are omitted.

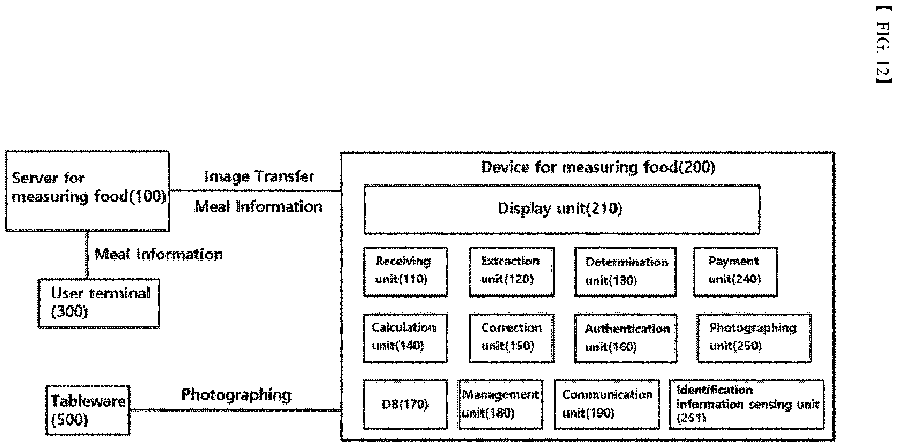

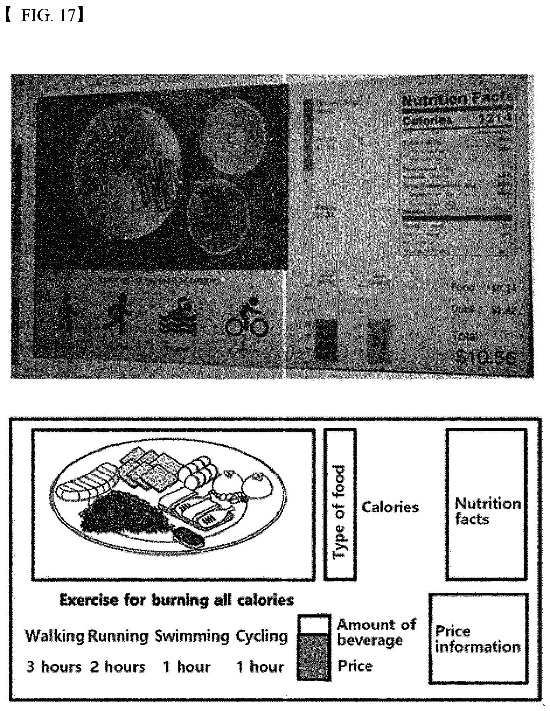

Hereinafter, FIG. 12 is a block diagram of a device for measuring food according to an exemplary embodiment of the present invention, FIGS. 13 to 1 are perspective views of devices for measuring food according to an exemplary embodiment of the present invention, and FIG. 17 is a screen of a device for measuring food according to an exemplary embodiment of the present invention.

The device for measuring food 200 may be provided at a place where food is served, and includes a receiving unit 110, an extraction unit 120, a determination unit 130, a calculation unit 140, a correction unit 150, an authentication unit 160, a database 170, a management unit 180. a communication unit 190, a display unit 210, a payment unit 240, and a photographing unit 250. However, in some embodiments, the device for measuring food 200 may include fewer or more components than the components illustrated in FIG. 12.

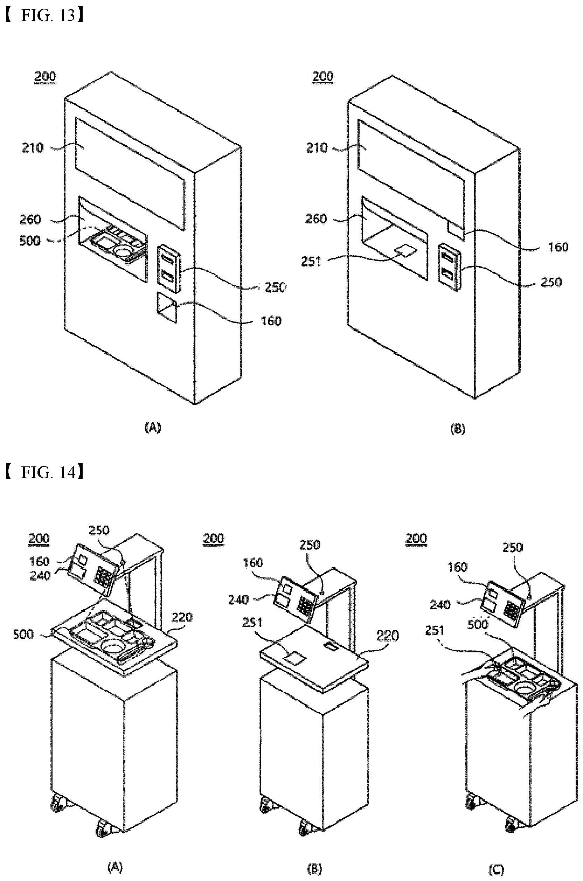

Referring to FIGS. 13 and 14, the device for measuring food 200 include a measuring area 220 or a plate 230 on which tableware 500 is placed. Referring to FIGS. 13 and 14, the photographing unit 250 photographs the tableware 500 placed on the measuring area 220 or the plate 230.

In addition, the measuring area 220 or the plate 230 include a weight measuring device (not shown) formed therein to measure the weight of the serving tableware placed on the upper surface thereof.

The receiving unit 110 receives a tableware image photographed through one or more photographing units 250. Here, the photographing unit 250 is positioned so that an upper surface of the tableware 500 may be photographed from the upper side over the tableware 500, and if an identification information sensing unit 251 is present, the identification information sensing unit 251 may be positioned so that identification information of the tableware 500 may be detected from the upper side, the lower side, or the side at the same time as the tableware 500 is photographed by the photographing unit 250.

The extraction unit 120 extracts food image data accommodated in each space 510 of the tableware 500 from the tableware image data containing food.

The determination unit 130 determines the type of each food through the extracted food image data.

The calculation unit 140 calculates the volume of each food by using the height information for each pixel of the extracted food image data.

The database 170 stores empty tableware images, tableware information including sizes, depths, and capacities of the plurality of spaces 510 formed in the tableware 500, and food information including weight per volume for each food.

The communication unit 190 performs communication to receive the tableware image photographed from the photographing unit 250 installed in the restaurant, and transmits various information calculated and generated by the server 10 to the terminal of the person in charge or the user.

The authentication unit 160 identifies the user by authenticating the user information received from the device such as the food measuring device 200 and the kiosk device, and loads various information about the user.

Information on the weight, calories, etc. of the foods in the food distribution table calculated through the calculation unit 140 of the server 10 is provided to the terminal of the user authenticated through the authentication unit 160 . In this case, information may be provided through a service application provided by the server 10 itself.

The food measuring device 200 may include a display unit 210, receive input of user authentication information for authenticating a user, and display a photographed image through the display.

In addition, when the device for measuring food 200 is provided in the form of FIG. 13 and the user places the tableware 500 on the measuring area 220, the photographing unit 250 provided in the measuring area 220 may photograph the tableware to obtain a tableware image and a post-meal tableware image. And the device for measuring food 200 may include a payment unit 240 so that a user may measure food and pay at the same time.

In some embodiments, referring to FIG. 14 (C), the device for measuring food 200 may not include the plate 230, and the photographing by the photographing unit 250 and the detection by the identification information detecting unit 251 may be performed while a meal subject is holding the tableware 500.

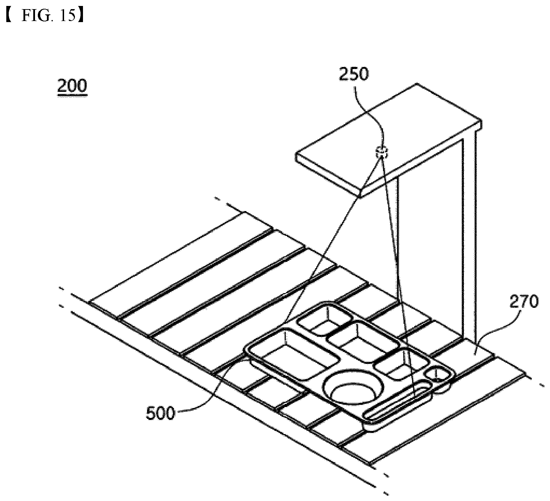

In some embodiments, referring to FIG. 15, the device for measuring food 200 may be installed in a tableware return section in which a conveyor belt 270 is installed. In the process of moving the tableware 500 by the conveyor belt 270, the photographing unit 250 may photograph the tableware 500 from the upper side over the tableware 500.

In some examples, the device for measuring food 200 may include a photographing unit 250, an identification information sensing unit 251, and an authentication unit 160, and the photographing unit 250 may be located in a relatively highest region, the authentication unit 160 may be located between the photographing unit 250 and the identification information sensing unit 251, and the identification information sensing unit 251 may be located in a relatively lowest region. Since the device for measuring food 200 has such a structure, the photographing unit 250, the identification information sensing unit 251, and the authentication unit 160 may obtain necessary information from the meal subject and the tableware 500 just by the meal subject stopping in front of the device for measuring food 200. And this may reduce inconvenience of the meal subject.

The photographing unit 250 is positioned in the highest region for the purpose of photographing the tableware 500 from above. Assuming that the authentication unit 160 recognizes the face of the meal subject, when the meal subject holds the tableware 500, the tableware 500 is located below the face of the meal subject, so the authentication unit 160 may be positioned relatively above the identification information sensing unit 251. Here, identification information 530 of the tableware 500 may be located on the side of the tableware 500 and may be recognized by the identification information sensing unit 251 when the meal subject stands while holding the tableware 500.

Meanwhile, the identification information sensing unit 251 and the authentication unit 160 may not always operate, but may only operate when the tableware 500 is photographed by the photographing unit 250, and through this, the recognition of the tableware 500 by the photographing unit 250 becomes a kind of enabler, thereby effectively operating the identification information sensing unit 251 and the authentication unit 160.

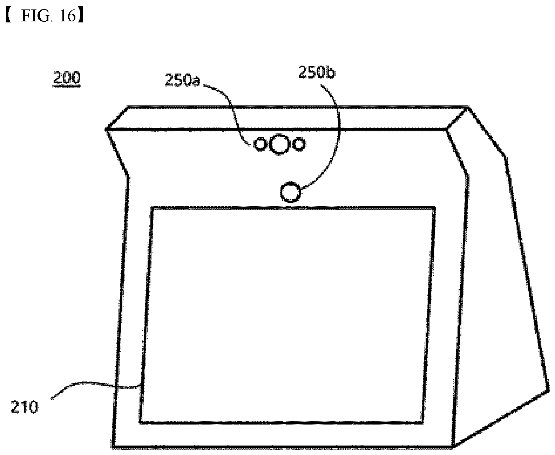

Referring to FIG. 16, the device for measuring food 200 may be set standing on a table or hung on a wall. A display unit 210 is positioned on front of the device for measuring food 200, and a photographing unit 250a for photographing food or tableware containing food and a photographing unit 250b for photographing biometric information of a meal subject are positioned on front of the device for measuring food 200.

The device for measuring food 200 may be tilted with its upper part toward the front, and the photographing unit 250a for photographing food or tableware containing food may be positioned in the tilted area of the device for measuring food 200 to photograph the tableware 500 located below. Although the photographing unit 250b for photographing biometric information of a meal subject is shown not to be in the tilted area, it may be located in the tilted area.

And when the meal subject photographs the tableware 500 containing food with the device for measuring food 200 or the user terminal 300, the screen of FIG. 17 may be displayed on the display unit 210/310.

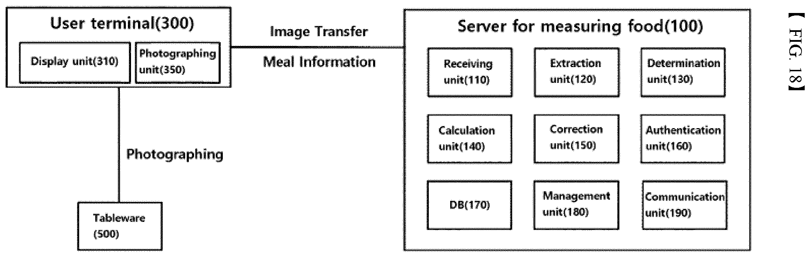

For example, a tableware image containing food photographed by the photographing unit 250/350 may be displayed, and information on a type of food and calories according to the type of food may be displayed. And when a beverage and the like is contained in a cup, the height of the beverage in the cup may be displayed. In addition, information on exercise and exercise time required to burn calories from eating food may also be displayed together. Besides, nutrition facts and price information of the food to be consumed may also be displayed together. In addition, since FIGS. 17 and 18 are only different in that the user terminal 300 performs the role of the device for measuring food 200 compared to FIGS. 9 and 11, detailed descriptions are omitted.

Since the detailed contents of the device for measuring food 200 configurations according to an embodiment of the present invention described above differs from the method for measuring food described with reference to FIGS. 1 to 8 only in the category of the invention and the contents are the same, duplicate descriptions and examples are omitted.

The method for measuring food according to an embodiment of the present invention described above can be embodied as a program (or application) to be executed in combination with a server which is hardware, and can be stored in a medium.

The above-described program may include a code coded in a computer language such as C, C++, JAVA, and machine language readable by a computer's processor (CPU) in order for the computer to read the program and execute the methods embodied as a program. Such code may include a functional code related to a function and the like that defines necessary functions for executing the methods, and may include a control code related to an execution procedure necessary for the processor of the computer to execute the functions according to a predetermined procedure. In addition, such code may further include a code related to a memory reference to which location (address number) of the internal or external memory of the computer should be referenced for additional information or media required for the processor of the computer to execute the functions. In addition, when the processor of the computer needs to communicate with any other computer or server in a remote location in order to execute the functions, the code may further include a communication related code for how to communicate with any other computer or server in a remote location using a communication module of the computer and what information or media to be transmitted and received during communication and the like.

The storage medium refers not to a medium that stores data for a short moment, such as a register, cache, memory, etc., but refers to a medium that stores data semi-permanently and can be read by a device. Specifically, examples of the storage medium include, but are not limited to, ROM, RAM, CD-ROM, magnetic tape, floppy disk, and optical data storage device. That is, the program may be stored in various recording media on various servers to which the computer can access, or in various recording media on the user's computer. In addition, the medium may be distributed over computer systems connected through a network, and may store a code readable by the computer in a distributed manner.

The steps of a method or algorithm described in relation to an embodiment of the present invention may be implemented directly in hardware, as a software module executed by hardware, or by a combination thereof. A software module may contain random access memory (RAM), read only memory (ROM), erasable programmable ROM (EPROM), electrically erasable programmable ROM (EEPROM), flash memory, hard disk, removable disk, CD-ROM, or It may reside in any type of computer-readable recording medium well known in the art to which the present invention pertains.

In the above, embodiments of the present invention have been described with reference to the accompanying drawings, but it will be understood by those of ordinary skill in the art that the present invention may be implemented in other specific forms without changing essential features. Therefore, the embodiments described above are exemplary in all aspects and should be understood as non-limiting.

## Claims

1. A method for measuring food performed by a computer, the method comprising:
receiving image data of tableware containing food and depth data of the tableware containing the food, when the tableware containing food is photographed by a photographing unit (S20);
calculating a tilt of the tableware image from the tableware image data, and correcting the image data of the tableware containing food and the depth data of the tableware containing food according to the calculated tilt (S25), wherein the method is **characterized by**:
extracting a shape of the tableware using the corrected depth data of the tableware containing food, and based on this, extracting food image data accommodated in the tableware from the corrected tableware image data (S30);
determining a type of the food based on the extracted food image data (S40); and
calculating volume of the food based on the corrected depth data of the tableware containing food (S50),
wherein the method is further **characterized in that**:
in the step of calculating volume (S50), a volume of each food is calculated by using height information for each pixel of the extracted food image data,
wherein the step of calculating volume further comprises detecting a noise component that is not food and has a volume in the image data of the tableware containing food and excluding the volume of the detected noise component from the calculated food volume,
wherein the computer further comprises a database (170) that has stored noise information on an object corresponding to a noise component, and
the step of excluding the volume of the noise component comprises recognizing the noise component in the image data of the tableware containing food based on the stored noise information.

2. The method of claim 1, wherein the step of correcting (S25) comprises:
determining a plurality of points identified as flat areas among exposed areas of the tableware from the tableware image data, and calculating a tilt of the tableware image from the tableware image data using the determined plurality of points; and
correcting the image data of the tableware containing food and the depth data of the tableware containing food according to the calculated tilt.

3. The method of claim 1, wherein the step of calculating volume (S50) further comprises correcting the calculated volume of each food based on the tableware information including a size, depth and capacity of a space in which each food is accommodated.

4. The method of claim 1, wherein the step of calculating volume (S50) comprises, when the type of food accommodated in a specific space in the tableware is a liquid, recognizing a position where the liquid food and the corresponding space contact in the tableware image and calculating the volume of the liquid food using information on the accommodated space.

5. The method of claim 1, wherein the step of calculating volume (S50) comprises, when it is recognized that different foods are stacked in a specific space within the tableware, calculating the volume of the foods located on the lower side using image data of the foods located on the upper side, the calculated volume, and the information of the specific space.

6. The method of claim 1, wherein
the database (170) has built up big data by storing image data photographed through terminals of a plurality of users, information calculated through the image data, and information on restaurants that match the places where the images were photographed,
when the image of food is received, the computer matches location information where the image of the food was photographed and the determined type of food with the data in the database, detects previous calculation result of the matched details, and using this, corrects the calculated volume of the food.

7. A device for measuring food (100, 200), comprising:
a receiving unit (110) configured to receive image data of tableware containing food and depth data of the tableware containing the food, when the tableware containing food is photographed by a photographing unit, wherein the device for measuring food is **characterized by**:
a correction unit (150) configured to calculate a tilt of the tableware image from the tableware image data, and correct the image data of the tableware containing food and the depth data of the tableware containing food according to the calculated tilt;
an extraction unit (120) configured to extract a shape of the tableware using the corrected depth data of the tableware containing food, and based on this, to extract food image data accommodated in the tableware from the corrected tableware image data;
a determination unit (130) configured to determine a type of the food based on the extracted food image data; and
a calculation unit (140) configured to calculate volume of the food based on the corrected depth data of the tableware containing food,
wherein the device for measuring food is further **characterized in that**:
the calculation unit (140) is configured to calculate a volume of each food by using height information for each pixel of the extracted food image data,
wherein the calculation unit is configured to detect a noise component that is not food and has a volume in the image data of the tableware containing food and exclude the volume of the detected noise component from the calculated food volume,
wherein the device for measuring food further comprises a database (170) that has stored noise information on an object corresponding to a noise component, and
the calculation unit is configured to recognize the noise component in the image data of the tableware containing food based on the stored noise information.

## Patentansprüche

1. Verfahren zum Messen von Nahrungsmitteln, durchgeführt von einem Computer, wobei das Verfahren umfasst:
Empfangen von Bilddaten von Geschirr, das Nahrungsmittel enthält, und Tiefendaten des Geschirrs, das die Nahrungsmittel enthält, wenn das Geschirr, das Nahrungsmittel enthält, von einer Bilderfassungseinheit erfasst wird (S20);
Berechnen einer Neigung des Geschirrbildes aus den Geschirr-Bilddaten, und Korrigieren der Bilddaten des Geschirrs, das Nahrungsmittel enthält, und der Tiefendaten des Geschirrs, das Nahrungsmittel enthält, entsprechend der berechneten Neigung (S25),
wobei das Verfahren **gekennzeichnet ist durch**:
Extrahieren einer Form des Geschirrs unter Verwendung der korrigierten Tiefendaten des Geschirrs, das Nahrungsmittel enthält, und auf dieser Grundlage Extrahieren von Nahrungsmittel-Bilddaten, die in dem Geschirr enthalten sind, aus den korrigierten Geschirr-Bilddaten (S30);
Bestimmen einer Art der Nahrungsmittel auf der Grundlage der extrahierten Nahrungsmittel-Bilddaten (S40); und
Berechnen des Volumens der Nahrungsmittel auf der Grundlage der korrigierten Tiefendaten des Geschirrs, das Nahrungsmittel enthält (S50),
wobei das Verfahren ferner **dadurch** gekennzeichnet ist, dass:
in dem Schritt des Berechnens des Volumens (S50) ein Volumen jedes Nahrungsmittels unter Verwendung von Höheninformationen für jedes Pixel der extrahierten Nahrungsmittel-Bilddaten berechnet wird,
wobei der Schritt des Berechnens des Volumens ferner umfasst Detektieren einer Rauschkomponente, die kein Nahrungsmittel ist und ein Volumen in den Bilddaten des Geschirrs, das Nahrungsmittel enthält, aufweist, und Ausschließen des Volumens der detektierten Rauschkomponente aus dem berechneten Nahrungsmittelvolumen,
wobei der Computer ferner eine Datenbank (170) umfasst, in der Rauschinformationen zu einem Objekt gespeichert sind, das einer Rauschkomponente entspricht, und
der Schritt des Ausschließens des Volumens der Rauschkomponente Erkennen der Rauschkomponente in den Bilddaten des Geschirrs, das Nahrungsmittel enthält, auf der Grundlage der gespeicherten Rauschinformationen umfasst.

2. Verfahren nach Anspruch 1, wobei der Schritt des Korrigierens (S25) umfasst:
Bestimmen einer Vielzahl von Punkten, identifiziert als flache Bereiche unter den freiliegenden Bereichen des Geschirrs, aus den Geschirr-Bilddaten, und Berechnen einer Neigung des Geschirrbildes aus den Geschirr-Bilddaten unter Verwendung der bestimmten Vielzahl von Punkten; und
Korrigieren der Bilddaten des Geschirrs, das Nahrungsmittel enthält, und der Tiefendaten des Geschirrs, das Nahrungsmittel enthält, entsprechend der berechneten Neigung.

3. Verfahren nach Anspruch 1, wobei der Schritt des Berechnens des Volumens (S50) ferner Korrigieren des berechneten Volumens jedes Nahrungsmittels auf der Grundlage der Geschirr-Informationen umfasst, umfassend eine Größe, eine Tiefe und eine Kapazität eines Raums umfassen, in dem jedes Nahrungsmittel untergebracht ist.

4. Verfahren nach Anspruch 1, wobei der Schritt des Berechnens des Volumens (S50) umfasst, dass, wenn die Art der Nahrungsmittel, die in einem bestimmten Raum in dem Geschirr enthalten sind, eine Flüssigkeit ist, eine Position erkannt wird, an der die flüssigen Nahrungsmittel und der entsprechende Raum in dem Geschirrbild in Kontakt stehen, und das Volumen der flüssigen Nahrungsmittel unter Verwendung von Informationen über den enthaltenden Raum berechnet wird.

5. Verfahren nach Anspruch 1, wobei der Schritt des Berechnens des Volumens (S50) umfasst, wenn erkannt wird, dass verschiedene Nahrungsmittel in einem bestimmten Raum innerhalb des Geschirrs gestapelt sind, Berechnen des Volumens der Nahrungsmittel, die sich auf der Unterseite befinden, unter Verwendung von Bilddaten der Nahrungsmittel, die sich auf der Oberseite befinden, des berechneten Volumens und der Informationen über den bestimmten Raum.

6. Verfahren nach Anspruch 1, wobei
die Datenbank (170) Big Data aufgebaut hat, indem sie Bilddaten, die über Endgeräte einer Vielzahl von Benutzern erfasst wurden, Informationen, die anhand der Bilddaten berechnet wurden, und Informationen über Restaurants, die mit den Orten übereinstimmen, an denen die Bilder erfasst wurden, gespeichert hat,
wenn das Bild von Nahrungsmitteln empfangen wird, der Computer die Standortinformationen, an denen das Bild der Nahrungsmittel erfasst wurde, und die bestimmte Art der Nahrungsmittel mit den Daten in der Datenbank abgleicht, das vorherige Berechnungsergebnis der abgeglichenen Details detektiert, und unter Verwendung von diesem das berechnete Volumen der Nahrungsmittel korrigiert.

7. Vorrichtung zum Messen von Nahrungsmitteln (100, 200), umfassend:
eine Empfangseinheit (110), die so konfiguriert ist, dass sie Bilddaten von Geschirr, das Nahrungsmittel enthält, und Tiefendaten des Geschirrs, das die Nahrungsmittel enthält, empfängt, wenn das Geschirr, das Nahrungsmittel enthält, von einer Bilderfassungseinheit erfasst wird,
wobei die Vorrichtung zum Messen von Nahrungsmitteln **gekennzeichnet ist durch**: eine Korrektureinheit (150), die so konfiguriert ist, dass sie eine Neigung des Geschirrbildes aus den Geschirr-Bilddaten berechnet, und die Bilddaten des Geschirrs, das Nahrungsmittel enthält, und die Tiefendaten des Geschirrs, das Nahrungsmittel enthält, entsprechend der berechneten Neigung korrigiert;
eine Extraktionseinheit (120), die so konfiguriert ist, dass sie eine Form des Geschirrs unter Verwendung der korrigierten Tiefendaten des Geschirrs, das Nahrungsmittel enthält, extrahiert, und auf dieser Grundlage Nahrungsmittel-Bilddaten, die in dem Geschirr enthalten sind, aus den korrigierten Geschirr-Bilddaten extrahiert;
eine Bestimmungseinheit (130), die so konfiguriert ist, dass sie eine Art der Nahrungsmittel auf der Grundlage der extrahierten Nahrungsmittel-Bilddaten bestimmt; und
eine Berechnungseinheit (140), die so konfiguriert ist, dass sie ein Volumen der Nahrungsmittel auf der Grundlage der korrigierten Tiefendaten des Geschirrs, das Nahrungsmittel enthält, berechnet,
wobei die Vorrichtung zum Messen von Nahrungsmitteln ferner **dadurch** gekennzeichnet ist, dass:
die Berechnungseinheit (140) so konfiguriert ist, dass sie ein Volumen jedes Nahrungsmittels unter Verwendung von Höheninformationen für jedes Pixel der extrahierten Nahrungsmittel-Bilddaten berechnet,
wobei die Berechnungseinheit so konfiguriert ist, dass sie detektiert eine Rauschkomponente, die kein Nahrungsmittel ist und ein Volumen in den Bilddaten des Geschirrs, das Nahrungsmittel enthält, aufweist, und das Volumen der detektierten Rauschkomponente aus dem berechneten Nahrungsmittelvolumen ausschließt,
wobei die Vorrichtung zum Messen von Nahrungsmitteln ferner eine Datenbank (170) umfasst, in der Rauschinformationen zu einem Objekt gespeichert sind, das einer Rauschkomponente entspricht, und
die Berechnungseinheit so konfiguriert ist, dass sie die Rauschkomponente in den Bilddaten des Geschirrs, das Nahrungsmittel enthält, auf der Grundlage der gespeicherten Rauschinformationen erkennt.

## Revendications

1. Un procédé de mesure d'aliments mis en œuvre par un ordinateur, le procédé comprenant :
le fait de recevoir des données d'image de vaisselle contenant des aliments et de données de profondeur de la vaisselle contenant les aliments, lorsque la vaisselle contenant les aliments est photographiée par une unité de photographie (S20) ;
le fait de calculer une inclinaison de l'image de la vaisselle à partir des données d'image de la vaisselle, et le fait de corriger les données d'image de la vaisselle contenant des aliments et des données de profondeur de la vaisselle contenant des aliments en fonction de l'inclinaison calculée (S25),
le procédé étant **caractérisé par** :
le fait d'extraire une forme de la vaisselle en utilisant les données de profondeur corrigées de la vaisselle contenant des aliments, et sur cette base, d'extraire des données d'image des aliments contenus dans la vaisselle à partir des données d'image corrigées de la vaisselle (S30) ;
le fait de déterminer un type d'aliment sur la base des données d'image d'aliment extraites (S40) ; et
le fait de calculer le volume de l'aliment sur la base des données de profondeur corrigées de la vaisselle contenant l'aliment (S50),
le procédé étant en outre **caractérisé en ce que** :
à l'étape de calcul du volume (S50), un volume de chaque aliment est calculé en utilisant des informations de hauteur pour chaque pixel des données d'image des aliments extraites,
l'étape de calcul du volume comprenant en outre le fait de détecter une composante de bruit qui n'est pas un aliment et qui a un volume dans les données d'image de la vaisselle contenant des aliments et d'exclure le volume de la composante de bruit détectée du volume d'aliment calculé,
l'ordinateur comprenant en outre une base de données (170) qui a stocké des informations de bruit sur un objet correspondant à un composant de bruit, et
l'étape consistant à exclure le volume du composant de bruit comprend le fait de reconnaître le composant de bruit dans les données d'image de la vaisselle contenant des aliments sur la base des informations de bruit stockées.

2. Le procédé selon la revendication 1, dans lequel l'étape de correction (S25) comprend :
le fait de déterminer une pluralité de points identifiés comme étant des zones plates parmi les zones exposées de la vaisselle à partir des données d'image de la vaisselle, et de calculer une inclinaison de l'image de la vaisselle à partir des données d'image de la vaisselle en utilisant la pluralité de points déterminés ; et
le fait de corriger les données d'image de la vaisselle contenant des aliments et les données de profondeur de la vaisselle contenant des aliments en fonction de l'inclinaison calculée.

3. Le procédé selon la revendication 1, dans lequel l'étape de calcul du volume (S50) comprend en outre le fait de corriger le volume calculé de chaque aliment sur la base des informations relatives à la vaisselle, notamment la taille, la profondeur et la capacité d'un espace dans lequel chaque aliment est logé.

4. Le procédé selon la revendication 1, dans lequel l'étape de calcul du volume (S50) comprend, lorsque le type d'aliment reçu dans un espace spécifique aménagé dans la vaisselle est un liquide, le fait de reconnaître une position dans laquelle l'aliment liquide et l'espace correspondant entrent en contact dans l'image de la vaisselle et le fait de calculer le volume de l'aliment liquide en utilisant des informations sur l'espace de réception.

5. Le procédé selon la revendication 1, dans lequel l'étape de calcul du volume (S50) comprend, lorsqu'il est reconnu que différents aliments sont empilés dans un espace spécifique à l'intérieur de la vaisselle, le fait de calculer le volume des aliments situés sur le côté inférieur en utilisant des données d'image des aliments situés sur le côté supérieur, le volume calculé et les informations sur l'espace spécifique.

6. Le procédé selon la revendication 1, dans lequel
la base de données (170) a constitué un ensemble de données volumineuses en stockant des données d'image photographiées au moyen de terminaux d'une pluralité d'utilisateurs, des informations calculées à partir des données d'image et des informations sur les restaurants qui correspondent aux lieux où les images ont été photographiées ;
lorsque l'image d'un aliment est reçue, l'ordinateur fait correspondre les informations de localisation où l'image de l'aliment a été photographiée et le type d'aliment déterminé avec les données de la base de données, détecte le résultat du calcul précédent des détails correspondants et, en utilisant celui-ci, corrige le volume calculé de l'aliment.

7. Un dispositif de mesure d'aliments (100, 200), comprenant :
une unité de réception (110), configurée pour recevoir des données d'image de vaisselle contenant des aliments et des données de profondeur de la vaisselle contenant les aliments, lorsque la vaisselle contenant les aliments est photographiée par une unité de photographie,
le dispositif de mesure d'aliments étant **caractérisé par** :
une unité de correction (150), configurée pour calculer une inclinaison de l'image de la vaisselle à partir des données d'image de la vaisselle, et pour corriger les données d'image de la vaisselle contenant des aliments et les données de profondeur de la vaisselle contenant des aliments en fonction de l'inclinaison calculée ;
une unité d'extraction (120), configurée pour extraire une forme de la vaisselle en utilisant les données de profondeur corrigées de la vaisselle contenant des aliments, et sur cette base, pour extraire des données d'image des aliments contenus dans la vaisselle à partir des données d'image corrigées de la vaisselle ;
une unité de détermination (130), configurée pour déterminer un type d'aliment sur la base des données d'image d'aliment extraites ; et
une unité de calcul (140), configurée pour calculer le volume de l'aliment sur la base des données de profondeur corrigées de la vaisselle contenant l'aliment,
le dispositif de mesure d'aliment étant en outre **caractérisé en ce que** :
l'unité de calcul (140) est configurée pour calculer un volume de chaque aliment en utilisant des informations de hauteur pour chaque pixel des données d'image d'aliments extraites,
l'unité de calcul est configurée pour détecter une composante de bruit qui n'est pas un aliment et qui a un volume dans les données d'image de la vaisselle contenant les aliments et exclure le volume de la composante de bruit détectée du volume d'aliment calculé,
le dispositif de mesure des aliments comprend en outre une base de données (170) qui contient des informations stockées de bruit sur un objet correspondant à une composante de bruit, et
l'unité de calcul est configurée pour reconnaître la composante de bruit dans les données d'image de la vaisselle contenant les aliments sur la base des informations de bruit stockées.
